# EUROPÄISCHE PATENTSCHRIFT

(11) **EP 4 359 105 B1**
(45) Veröffentlichungstag und Bekanntmachung des Hinweises auf die Patenterteilung: **26.03.2025**
(21) Anmeldenummer: 22733348.1
(22) Anmeldetag: 08.06.2022
(51) Int. Cl.: B01D 46/00, B01D 46/48

(54) **VERFAHREN ZUR ABREINIGUNG EINES FILTERS**
METHOD FOR CLEANING A FILTER
PROCÉDÉ DE NETTOYAGE D'UN FILTRE

(30) Priorität: 23.06.2021 DE 102021116263
(43) Veröffentlichungstag der Anmeldung: 01.05.2024
(73) Patentinhaber: Gebr. Becker GmbH, 42279 Wuppertal (DE)
(72) Erfinder: DABRUCK, Markus, 42113 Wuppertal (DE); RADAU, Christian, 58332 Schwelm (DE); RADERMACHER, Bernhard, 41352 Korschenbroich (DE); SIMON, Daniel, 58332 Schwelm (DE)
(74) Vertreter: Müller, Enno
(86) Internationale Anmeldenummer: PCT/EP2022/065450
(87) Internationale Veröffentlichungsnummer: WO 2022/268496

(56) Entgegenhaltungen:
- CN-A- 109 248 508
- DE-A1- 10 350 395
- DE-A1- 102006 012 933

## Beschreibung

### Gebiet der Technik

Die Erfindung betrifft ein Verfahren zur Abreinigung eines Filters in einer Filtereinrichtung mit einem Filtergehäuse und dem darin befindlichen Filter, wobei die Filtereinrichtung eine Filtergut-Sammelkammer aufweist, zur Aufnahme von Filtergut, das im Zuge der Abreinigung des Filters anfällt.

### Stand der Technik

Bei Metall-Druckeinrichtungen, wie beispielsweise Lasersinter- oder Laserschmelzanlagen, weiter beispielsweise sogenannte 3D-Laserdruckanlagen, ist es bekannt, der Kabine der Druckeinrichtung im Umwälzverfahren Prozessgas zuzuführen, das im Hinblick auf während des Metall-Druckvorganges insbesondere durch die große Hitzeeinwirkung entstehende Verunreinigungen (beispielsweise Schmauch), die insbesondere durch die Laseranwendung entstehen können, in einer Filtereinrichtung gereinigt beziehungsweise regeneriert wird.

Die Herstellung eines Druckstückes in der Metall-Druckeinrichtung erfolgt bevorzugt in einer durch das Prozessgas erreichten Schutzgasatmosphäre. So wird als Prozessgas in der Regel ein inertes Gas, wie beispielsweise Argon oder Stickstoff, genutzt, wobei weiter Argon oder Stickstoff als alleiniges Gas genutzt wird. Prinzipiell kann aber auch eine Mischung von Gasen, insbesondere also inerten Gasen, als Prozess- oder Schutzgas vorliegen. In der Regel wird angestrebt, dass die Atmosphäre, insbesondere in der Kabine, keinen oder praktisch keinen Sauerstoff enthält. Das die Filtereinrichtung durchströmende Medium ist somit im Falle der Metall-Druckeinrichtung das Prozessgas.

Je nach Größe und/oder Komplexität des zu erzeugenden Druckstücks kann sich ein solcher Druckvorgang durchaus über mehrere Stunden bis hin zu mehreren Tagen erstrecken.

Eine Metall-Druckeinrichtung ist beispielsweise bekannt aus der DE 10 2017 206 792 A1. Im Zusammenhang mit einer Filtereinrichtung ist eine solche Metall-Druckeinrichtung beispielsweise bekannt geworden aus der DE 20 2012 013 036 U1. Aus der DE 10 2015 118 746 A1 ist ein Verfahren zur Abreinigung eines Filters bekannt. Zudem ist in der DE 10 2019 132 349 A1 eine Filtereinrichtung der in Rede stehenden Art sowie ein Verfahren zur Abreinigung des Filters beschrieben.

Das im Zuge der Abreinigung des Filters in der Filterreinigung anfallende Filtergut besteht in der Regel aus einem hoch reaktiven Material. Entsprechend ergibt sich im Zuge der Entsorgung des Filterguts die erhöhte Gefahr einer Entzündung bei Verlassen der durch das Prozessgas gegebenen Schutzgas-Atmosphäre.

In diesem Zusammenhang ist es bekannt, insbesondere bei kleineren Anlagen, Einwegfilter einzusetzen, die mit Erreichen eines vorgegebenen Füllgrads entsorgt werden. Auch ist es bekannt, insbesondere Einwegfilter mit größerem Aufnahmevolumen, mit Wasser und/oder Öl zu fluten, wodurch eine Passivierung des Filtermaterials erreicht wird. Hiernach kann der Einwegfilter aus dem Gehäuse entfernt und entsorgt werden. Das Gehäuse wird nach einer Reinigung mit einem neuen Einwegfilter bestückt.

Auch sind diesbezüglich Lösungen bekannt, bei welchen in das Filtergehäuse kontinuierlich ein Brandhinderungsmittel, wie Kalk oder Glasgranulat, eingeblasen wird, sodass die gesamte Oberfläche des Filters benetzt ist und sich mit dem an dem Filter herausgefilterten Material vermischt. Im Abreinigungsprozess wird dieses Filtergut-Brandhinderungsmittel-Gemisch in eine Filtergut-Sammelkammer überführt. Mit jedem Abreinigungsprozess des Filters ergibt sich dabei eine vergleichsweise relativ hohe Abfallmenge, was eine vergleichsweise häufige Leerung der Filtergut-Sammelkammer zur Folge hat.

Eine Abreinigung des Filters durch Aussprühen mit Öl ist im Hinblick auf die Entsorgung problematisch.

Aus der DE 10 2006 012 933 A1 ist ein Verfahren zur Abreinigung eines Filters in einer Filtereinrichtung bekannt, bei welchem die Filtergut-Sammelkammer zunächst mit einem Inertgas geflutet wird. Aus der DE 10 350 395 A1 ist ein Verfahren zum Abreinigen eines Filters in einer Filtereinrichtung bekannt, bei welchem die Filtergut-Sammelkammer mit Additivpartikeln gefüllt wird. Nach Erreichen eines vorgegebenen Füllstandes wird die Filtergut-Sammelkammer gegen eine neue Filtergut-Sammelkammer ausgetauscht.

Aus der CN 109248508 A ist ein Verfahren zur Abreinigung eines Filters in einer Filtereinrichtung bekannt, bei welchem in der Filtergut-Sammelkammer ein vorab eingebrachtes inertes Material enthalten ist, bei welchem es sich um Calciumcarbonatpulver handeln kann.

### Zusammenfassung der Erfindung

Ausgehend von dem zuletzt genannten Stand der Technik beschäftigt sich die Erfindung mit der Aufgabe, ein vorteilhaftes Verfahren zur Abreinigung eines Filters in einer Filtereinrichtung anzugeben.

Diese Aufgabe ist beim Gegenstand des Anspruches 1 gelöst, wobei darauf abgestellt ist, dass im Zuge einer Abnahme der Filtergut-Sammelkammer von der Filtereinrichtung ein gezielter Austausch einer Kammeratmosphäre gegen die umgebende Atmosphäre vorgenommen wird, wobei in Verbindung mit einem Einströmen von Atmosphärenluft eine Mischbewegung der Filtergut-Sammelkammer vorgenommen wird, zur Durchmischung des Filterguts mit dem Feststoffmaterial.

Das erfindungsgemäß in der Filtergut-Sammelkammer bereits vor einem ersten Abreinigungsvorgang des Filters aufgenommene Brandhinderungsmittel ist bevorzugt Voraussetzung für eine in einem späteren Verfahrensschritt durchzuführende kontrollierte Passivierung des Filterguts. Das Brandhinderungsmittel wird vor einem ersten Abreinigungsvorgang in der das abgereinigte Filtergut aufnehmenden Sammelkammer aufgenommen. Diese Menge an Brandhinderungsmittel ist ausreichend für die gesamte Anzahl an Abreinigungsvorgängen, für die die Sammelkammer ausgelegt ist.

Im Zuge der durch das Brandhinderungsmittel kontrolliert durchführbaren Reaktion kann sich durchaus eine Temperaturerhöhung innerhalb der Sammelkammer ergeben. Diese fällt aber so gering aus, dass die Wärme über die Gehäusewandung der Sammelkammer an die Umgebung abgegeben werden kann.

Die Filtergut-Sammelkammer kann mit einem einen gezielten Luftaustausch mit einer umgebenden Atmosphäre zulassenden Deckel verschließbar sein.

Der Luftaustausch erfolgt bei von der Filtereinrichtung abgenommener Sammelkammer und bevorzugt nach einer ersten Durchmischung des Kammerinhalts.

Durch die Ermöglichung eines gezielten Luftaustauschs mit der umgebenden Atmosphäre ist ein Prozess durchführbar, zur Passivierung des in der Sammelkammer aufgenommenen, zunächst reaktiven Filterguts. Durch den Luftaustausch kann eine gezielte Oxidation mit dem Luftsauerstoff aus der umgebenden Atmosphäre in der Sammelkammer erreicht werden. Der gezielte Luftaustausch kann beispielsweise durch Betätigung eines in dem Deckel vorgesehenen Ventils erreicht werden. Ein solches Ventil kann darüber hinaus auch außerhalb des Deckels vorgesehen sein, beispielsweise angeschlossen über eine Strömungsleitung, die eine zur Umgebung hin geschlossene Verbindung zwischen dem Ventil und einer deckelseitigen, mit dem Sammelkammer-Inneren verbundenen Öffnung bilden kann.

Die Filtergut-Sammelkammer kann in einer Aufnahmeeinrichtung drehbar und/oder schwenkbar sein.

Durch das Drehen und/oder Schwenken der bevorzugt von der Filtereinrichtung entfernten und in der Aufnahmeeinrichtung aufgenommenen Sammelkammer kann in vorteilhafter Weise eine beispielsweise einen Passivierung- beziehungsweise Oxidation-Prozess unterstützende Durchmischung des in der Sammelkammer befindlichen Filterguts erreicht werden. Dabei wird der Filtergut-Sammelbehälter bevorzugt insgesamt gedreht und/oder geschwenkt.

Die Drehung und/oder Schwenkung beziehungsweise, wie bevorzugt, die Drehung in einer verschwenkten Stellung der Sammelkammer kann dabei zunächst um eine beispielsweise einer Rotationsachse der Sammelkammer entsprechenden Körperachse erfolgen, darüber hinaus bevorzugt um eine Querachse zu dieser Körperachse. Auch kann eine Drehung beziehungsweise Verschwenkung um alle weiteren geometrischen Achsen, die bevorzugt die Körperachse und/oder die Querachse schneiden, erfolgen.

Bei einer Überlagerung einer Drehung beziehungsweise Verschwenkung der Sammelkammer um mehrere geometrische Achsen kann sich bezüglich der Sammelkammer ein Taumeln in der Aufnahmeeinrichtung ergeben. Darüber hinaus können sich auch beispielsweise zum Ablösen eines sich gegebenenfalls wandungsinnenseitig der Sammelkammer abgesetzten Filterkuchens ruckartige Dreh- und/oder Schwenkbewegungen beziehungsweise Taumelbewegungen ergeben.

Im Zusammenhang mit dem vorgeschlagenen Verfahren kann die Filtergut-Sammelkammer zur Brandhinderung bevorzugt vor einem ersten Filter-Abreinigungsvorgang mit einem Gas befüllt werden. Diesbezüglich ist ein Gas bevorzugt, welches die mögliche Brandgefahr des aufgenommenen Filterguts in der Sammelkammer verhindert. Ein solches Gas verhindert insbesondere eine nicht kontrollierte Oxidation des reaktiven Filterguts. Dabei ist weiter bevorzugt angestrebt, dass die Atmosphäre in der Sammelkammer keinen oder praktisch keinen Sauerstoff enthält.

In einem bevorzugten Verfahren ist die Filtergut-Sammelkammer zur Brandhinderung mit einem Schutzgas befüllt. Bevorzugt ist in diesem Zusammenhang ein Schutzgas, entsprechend dem bevorzugt verwendeten Prozessgas, aus welchem das reaktive Filtergut herausgefiltert wird.

Bei dem Schutzgas handelt es sich entsprechend bevorzugt um ein inertes Gas, wie beispielsweise Argon oder Stickstoff, wobei weiter Argon oder Stickstoff bevorzugt als alleiniges Gas genutzt sein kann. Prinzipiell kann aber auch eine Mischung von insbesondere inerten Gasen als Schutzgas vorliegen.

Die Filtergut-Sammelkammerwird über einen Teil ihres Volumens mit einem Festkörpermaterial befüllt. Die Filtergut-Sammelkammer ist bereits vor einem ersten Abreinigungsvorgang des Filters mit dem als Brandschutzmaterial wirkenden Festkörpermaterial gefüllt, sodass im Zuge eines Reinigungsprozesses von dem Filter gelöstes reaktives Filtergut auf dieser Basisbefüllung abgelegt wird. Das Festkörpermaterial wird entsprechend nicht, wie beispielsweise aus dem Stand der Technik bekannt, bei jedem Reinigungsvorgang in das Filtergehäuse und auf die Oberfläche des Filters eingeblasen, sondern vielmehr in einer vorgegebenen Menge vor einem ersten Reinigungsvorgang vorab in den Sammelbehälter verbracht. Im Zuge einer Reinigung des Filters wird entsprechend bevorzugt nur das vom Filter gelöste Filtergut in den Filtergut-Sammelbehälter verbracht, und erst später in einem nachgeschalteten Prozess mit dem Festkörpermaterial vermischt und gezielt neutralisiert.

Bei dem bekannten Verfahren mit Einblasen eines Brandhinderungsmittels in die Sammelkammer ist das Filtergut während und nach der Ausschleusung in die Umgebung weiterhin reaktiv. Entsprechend muss dieses auch nach der Ausschleusung weiter mit großen Mengen an Brandhinderungsmittel sicher umschlossen sein. Durch das vorgeschlagene Verfahren hingegen wird in vorteilhafter Weise im Vergleich zu den Lösungen mit Einblasen in den Filterraum wesentlich weniger Brandhinderungsmittel benötigt. Eine Ausschleusung des Filterguts erfolgt erst nach vollständiger Passivierung.

Das Festkörpermaterial wird bevorzugt vor einer ersten Nutzung der Sammelkammer zu etwa 25 bis zu etwa 75 % des nutzbaren Aufnahmevolumens der Filtergut-Sammelkammer in diese gefüllt, abhängig von der Reaktionsfähigkeit des Filterguts.

Es kann sich weiter beispielsweise im Zuge einer durchgeführten Abreinigung ein Filtergutvolumen von etwa 15 bis 25 cm³ nach etwa 10 bis 14 Betriebsstunden, bevorzugt etwa 20 cm³ nach 12 Betriebsstunden, ergeben. Bei einer angenommenen maximal zulässigen Befüllung der Filtergut-Sammelkammer mit etwa 3.000 cm³ Filtergut ergeben sich etwa 120 bis 200 zulässige Filterabreinigungen beziehungsweise 1.500 bis 2.000 Betriebsstunden als Wechsel- beziehungsweise Entleerungsintervall für die Sammelkammer. Bei Filtersystemen mit beispielsweise zwei parallel arbeitenden Filtereinrichtungen verdoppelt sich die Zeit zwischen den Abreinigungsvorgängen, so dass dann bei weiterhin beispielsweise 120 bis 200 zulässigen Abreinigungsvorgängen pro Filtereinrichtung eine Gesamtbetriebszeit von 3.000 bis 4.000 Stunden erreicht wird, so dass jeder Behälter entsprechend erst nach 3.000 bis 4.000 Stunden entnommen und entleert werden muss. Bei einem 7-Tage-Betrieb der gesamten Anlage mit 90 % Verfügbarkeit kann somit in vorteilhafter Weise erst alle 6 Monate eine Entleerung einer Sammelkammer nötig sein.

Das Festkörpermaterial kann dabei granulatförmig sein. Bezogen auf eine Querschnittsfläche durch ein solches granulatförmiges Festkörpermaterial ergibt sich ein größtes bevorzugtes Erstreckungsmaß (Korngröße) des Festkörpers, welches bevorzugt kleiner ist als 1 mm, weiter insbesondere kleiner als 0,5 mm bis hin zu beispielsweise 0,5 mm.

So kann weiter gemäß einem bevorzugten Verfahren ein Festkörpermaterial zur Anwendung kommen, welches glasartig ist. Beispielsweise kann es sich dabei um ein Glasgranulat handeln, beispielsweise mit einer Korngröße von etwa 0,1 bis etwa 0,3 mm.

Die Filtergut-Sammelkammer kann weiter bevorzugt, nachdem ein vorbestimmter Füllgrad an Filtergut in der Filtergut-Sammelkammer erreicht ist, von der Filtereinrichtung abgenommen werden und das Schutzgas gegen Atmosphärengas ausgetauscht werden.

Zur weiteren Vorbereitung eines solchen reaktiven Filterguts auf eine abschließende Entsorgung wird die Filtergut-Sammelkammer von der Filtereinrichtung abgenommen. Die Filtereinrichtung kann hiernach mit einer bevorzugt erneut mit Brandhinderungsmittel gefüllten weiteren Sammelkammer bestückt werden, sodass die Filtereinrichtung wieder in den üblichen Abreinigungsprozess für das Prozessgas eingebunden werden kann.

Im Zuge der Abnahme von der Filtereinrichtung, bevorzugt nach Vollendung der Abnahme, wird der gezielte Austausch der Kammeratmosphäre (Schutzgas) gegen die umgebende Atmosphäre vorgenommen. Dabei wird bevorzugt sukzessive das Schutzgas gegen Umgebungsluft ausgetauscht, wobei durch den hierbei in die Sammelkammer eindringenden Luftsauerstoff eine Oxidation und somit eine Passivierung des Filterguts nach und nach erreicht wird. Durch die gezielte und bevorzugt zeitlich verzögerte Beaufschlagung des Filterguts mit Sauerstoff ist die Brandgefahr im Wesentlichen gebannt.

Die Filtergut-Sammelkammer kann ein nutzbares Aufnahmevolumen für Filtergut von beispielsweise etwa 10.000 bis 25.000 cm³ oder mehr, weiter beispielsweise etwa 20.000 cm³, aufweisen. Das Gesamtvolumen kann demgegenüber um beispielsweise etwa 20 bis 25 % größer gewählt sein.

Bezogen auf das Aufnahmevolumen kann der Austausch über einen Zeitraum von mehreren Stunden, so beispielsweise etwa 2 Stunden oder mehr bis weiter beispielsweise 12 Stunden oder mehr vorgenommen werden.

In einer vorteilhaften Weiterbildung des Verfahrens ist vorgesehen, dass in Verbindung mit dem Einströmen von Atmosphärenluft eine Bewegung der Filtergut-Sammelkammer vorgenommen wird, zur Durchmischung des Filterguts, bevorzugt des Filterguts, mit dem Feststoffmaterial. Eine solche Durchmischung des Filterguts kann zunächst allein und ohne Einströmen von Atmosphärenluft erfolgen, um so eine gleichmäßige Vermischung von Filtergut und bevorzugt vorgesehenem Feststoffmaterial zu erreichen. Hiernach kann gegebenenfalls in der Filtergut-Sammelkammer zufolge Absaugen des Schutzgases ein Unterdruck erzeugt werden. Über mechanische Mittel, beispielsweise ein Drosselventil, kann folgend, bevorzugt unter Fortsetzung der Durchmischung, eine Verbindung des Sammelkammer-Inneren mit der umgebenden Atmosphäre erreicht werden, zur gezielten beziehungsweise gesteuerten Reaktion des Filterguts mit dem Luftsauerstoff.

Dabei kann insbesondere aufgrund einer intensiven Vermischung mit dem Feststoffmaterial immer nur eine vergleichsweise kleine Menge an Filtergut an der Oberfläche des Filtergut/Feststoffmaterial-Gemenges mit dem sehr langsam und kontrolliert in die Sammelkammer einströmenden Luftsauerstoff reagieren.

Durch die gezielte Reaktion mit Luftsauerstoff wird das Filtergut so weit passiviert, dass eine Gefährdung bei der abschließenden Entsorgung des Filterguts ausgeschlossen ist.

Zur drehenden und/oder schwenkenden Bewegung sowie gegebenenfalls auch zum gezielten Luftaustausch mit umgebender Atmosphäre kann beispielsweise eine gesonderte Aufnahmeeinrichtung für eine Filtergut-Sammelkammer der eingangs beschriebenen Art Verwendung finden.

Die von der Filtereinrichtung abgenommene Filtergut-Sammelkammer kann, insbesondere nach einer durchgeführten Passivierung des Filterguts, bevorzugt durch Vermischung mit Festkörpermaterial und Reaktion mit Luftsauerstoff, an einen Transportbehälter angeschlossen werden, wobei weiter bevorzugt das Filtergut unmittelbar in einen jedenfalls zur umgebenden Atmosphäre abgesperrten Raum des Transportbehälter überführt wird. Die Filtergut-Sammelkammer wird, gegebenenfalls unter Nutzung einer Aufnahmeeinrichtung, nach der Passivierung des Filterguts in den Transportbehälter entleert. Eine solche Entleerung kann, wie auch bevorzugt, allein schwerkraftabhängig erfolgen, wobei die Filtergut-Sammelkammer, gegebenenfalls unter Nutzung der Aufnahmeeinrichtung, beispielsweise in eine Überkopf-Stellung verbracht wird und in dieser Stellung an den Transportbehälter angeschlossen wird. Die Filtergut-Übergabe aus der Sammelkammer heraus in den Transportbehälter erfolgt bevorzugt in einem zur Umgebung hin abgeschlossenen Bereich. Eine Kontaminierung der Umgebung mit austretendem Filtergut ist hierdurch verhindert.

Zusammen mit dem Filtergut wird im Zuge der Entleerung in den Transportbehälter auch das vor einer ersten Aufnahme von Filtergut in die Sammelkammer gefüllte Brandhinderungsmittel, beispielsweise in Form eines Festkörpermaterials, mit entsorgt.

Vor einer Wiederanordnung der Filtergut-Sammelkammer an die Filtereinrichtung wird diese insbesondere wieder mit einem Brandhinderungsmittel befüllt. So kann vor einer solchen Wiederanordnung eine Befüllung mit Festkörpermaterial und/oder Schutzgas erfolgen. Auch kann eine solche Befüllung mit Brandhinderungsmittel beispielsweise unmittelbar nach einer Anordnung der Filtergut-Sammelkammer an der Filtereinrichtung erfolgen.

Die Filtergut-Sammelkammer weist gemäß einer bevorzugten Ausgestaltung ein selbstschließendes Ventil auf. Dieses Ventil verschließt insbesondere im Zuge einer Abnahme der Sammelkammer von der Filtereinrichtung die im üblichen Filterbetrieb den Durchtritt von abgeschiedenem Filtergut in die Sammelkammer ermöglichende Öffnung. Weiter bevorzugt ist eine Einrichtung vorgesehen, die das Ventil bei von der Filtereinrichtung abgenommener Filtergut-Sammelkammer zum Gasaustausch gegen Atmosphärengas betätigen kann. Diese Einrichtung kann durch den Deckel oder einer an dem Deckel ausgebildeten Vorrichtung vollständig oder teilweise gebildet sein.

Darüber hinaus kann die Einrichtung beispielsweise eine Vorrichtung zur Verlagerung des kammerseitigen Ventils in die Offenstellung aufweisen und gegebenenfalls darüber hinaus eine gesonderte Ventilausbildung, beispielsweise in Art eines Drosselventil, zum gezielten und gesteuerten Einlass von Luftatmosphäre in die Sammelkammer.

Auch können an der Sammelkammer beispielsweise stangenartige Handhabungsteile ausgebildet sein. Diese Handhabungsteile können zum Transport der Sammelkammer nach Entfernen von der Filtereinrichtung genutzt sein, so beispielsweise zum händischen Transport oder auch zu einem Transport mittels eines Fahrgestells. Darüber hinaus können die stangenartigen Handhabungsteile, insbesondere Teile oder Abschnitte dieser Handhabungsteile, ausgebildet sein zur mittelbaren oder unmittelbaren Einwirkung auf eine die Halterung der Sammelkammer an der Filtereinrichtung sichernde, auslösbare Verrastung.

### Kurze Beschreibung der Zeichnungen

Nachstehend ist die Erfindung anhand der beigefügten Zeichnung, die lediglich ein Ausführungsbeispiel darstellt, näher erläutert. Es zeigt:
- Fig. 1: in schematischer perspektivischer Darstellung eine Metall-Druckeinrichtung mit einem zugeordneten Filtermodul, aufweisend mehrere Filtereinrichtungen;
- Fig. 2: in perspektivischer Darstellung die Anordnung von drei strömungsmäßig parallelgeschalteten Filtereinrichtungen mit einem Umwälzgebläse und einem Mediumkühler;
- Fig. 3: eine schematische Schnittdarstellung durch eine Filtereinrichtung gemäß der Linie III-III in Figur 2, betreffend einen Verfahrensschritt zur Filterung eines durch die Filtereinrichtung strömenden Mediums;
- Fig. 4: eine Schnittdarstellung gemäß Figur 3, jedoch betreffend eine versetzte Schnittebene;
- Fig. 5: eine der Figur 3 entsprechende Schnittdarstellung durch die Filtereinrichtung, betreffend einen Verfahrensschritt zur Evakuierung des Innenraumes eines Filtergehäuses;
- Fig. 6: eine Folgedarstellung zu Figur 5, betreffend einen Verfahrensschritt zur Abreinigung eines Filters in dem Filtergehäuse der Filtereinrichtung;
- Fig. 7: eine Folgedarstellung zu Figur 6 nach Beendigung des Abreinigungsvorganges und Überführen von Filtergut in eine Filtergut-Sammelkammer;
- Fig. 8: die Herausvergrößerung des Bereiches VIII bei Abnahme der Filtergut-Sammelkammer vom Filtergehäuse;
- Fig. 9: die Filtergut-Sammelkammer in perspektivischer Einzeldarstellung mit einem zuordbaren Deckel;
- Fig. 10: die von der Filtereinrichtung entnommene Filtergut-Sammelkammer in einer Anordnungsstellung an ein Transportfahrzeug im Zuge eines Heranfahrens an eine Aufnahmeeinrichtung;

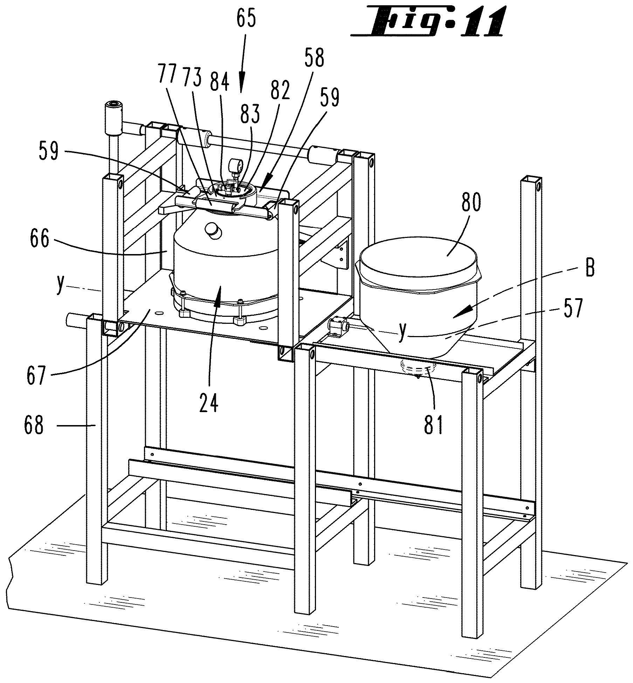

- Fig. 11: die in der Aufnahmeeinrichtung abgestellte Filtergut-Sammelkammer;
- Fig. 12: die in der Aufnahmeeinrichtung in eine Mischposition geschwenkte Filtergut-Sammelkammer;
- Fig. 13: die Mischposition der Filtergut-Sammelkammer in einer schematischen Vertikalschnittdarstellung;
- Fig. 14: eine perspektivische Querschnittdarstellung durch die Filtergut-Sammelkammer;
- Fig. 15: eine Folgedarstellung zu Figur 12, betreffend die Filtergut-Sammelkammer im Zuge einer Passivierung des Kammerinhalts;
- Fig. 16: eine der Figur 13 entsprechende Schnittdarstellung, betreffend eine Stellung der Sammelkammer im Zuge der Passivierung gemäß Figur 15;

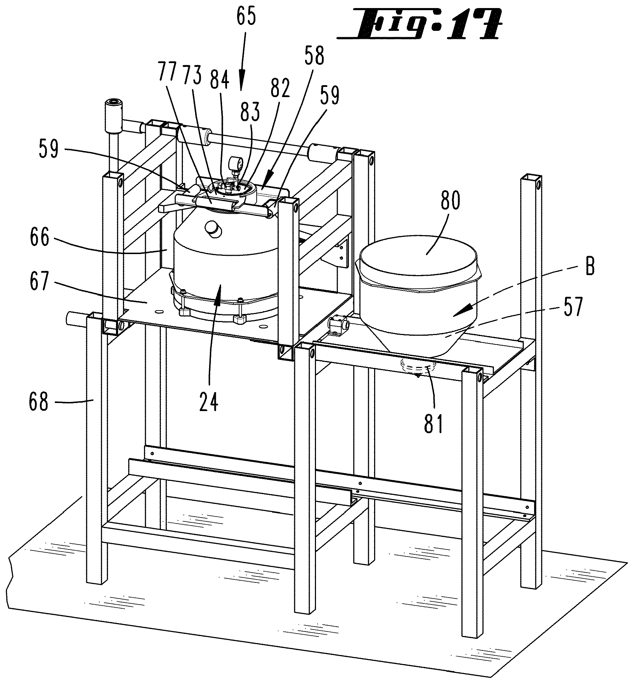

- Fig. 17: die Aufnahmeeinrichtung mit der nach der Passivierung in die Abstellausrichtung gemäß Figur 11 zurückverbrachten Filtergut-Sammelkammer;
- Fig. 18: die mit passiviertem Filtergut befüllte Filtergut-Sammelkammer in einer weiteren Anordnungsstellung an dem Transportfahrzeug im Zuge einer Abholung der Sammelkammer von der Aufnahmeeinrichtung;
- Fig. 19: eine Folgedarstellung zu Figur 18 nach Wenden der Filtergut-Sammelkammer in eine Entleerungsposition;
- Fig. 20: eine Folgedarstellung zu Figur 19 nach Anheben der Filtergut-Sammelkammer;
- Fig. 21: eine Situation im Zuge des Heranführens der Filtergut-Sammelkammer unter Nutzung des Transportfahrzeugs zu einem Transportbehälter;
- Fig. 22: eine Situation im Zuge des Andockens der Filtergut-Sammelkammer an den Transportbehälter;
- Fig. 23: die Entleerungssituation;
- Fig. 24: die Folgesituation zu Figur 23, nach erfolgter Entleerung;
- Fig. 25: die entleerte Filtergut-Sammelkammer in dem Transportfahrzeug nach einem Zurückwenden in die Ausgangsposition und erneutem Anfahren an die Aufnahmeeinrichtung, zum Befüllen der Sammelkammer mit einem Feststoffmaterial;
- Fig. 26: die Befüllsituation nach Andocken der Sammelkammer an ein in der Aufnahmevorrichtung vorgesehenes Vorratsbehältnis;
- Fig. 27: die Situation nach einer Befüllung der Sammelkammer mit Feststoffmaterial und Absenken der Filtereinrichtung;
- Fig. 28: die Rücktransportsituation der mit Feststoffmaterial befüllten Sammelkammer zurück zu der Filtereinrichtung;
- Fig. 29: eine schematische Schnittdarstellung durch die Filtereinrichtung gemäß Figur 3, nach Wiederanordnung der Filtergut-Sammelkammer an der Filtereinrichtung.

### Beschreibung der Ausführungsformen

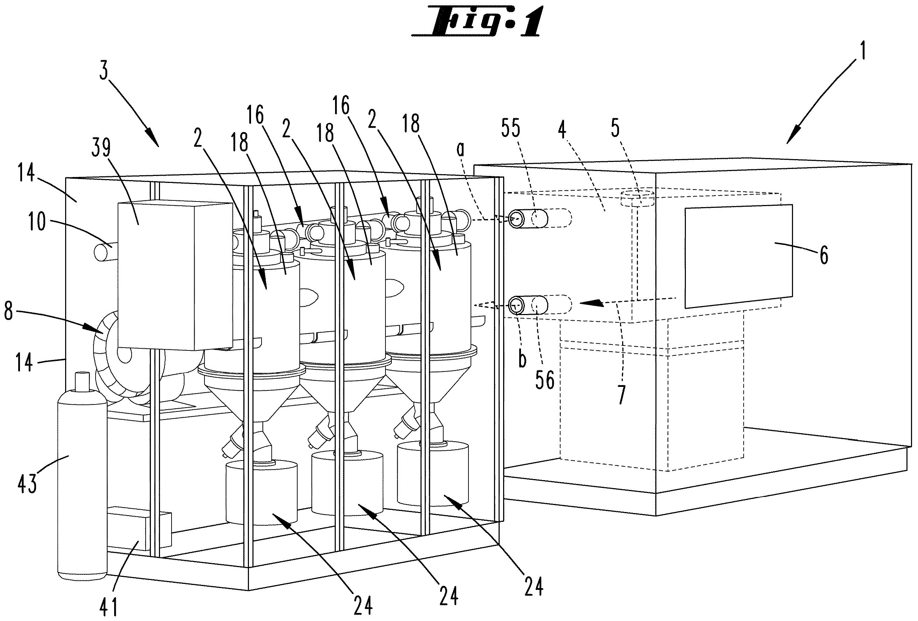

Dargestellt und beschrieben ist, zunächst mit Bezug zu Figur 1, eine Metall-Druckeinrichtung 1 mit einem zugeordneten, eine Vielzahl von Filtereinrichtungen 2 aufweisenden Filtermodul 3.

Die Metall-Druckeinrichtung 1 weist zunächst und im Wesentlichen eine Kabine 4 auf, in welcher der Metall-Druckvorgang durchgeführt werden kann. Hierbei wird zufolge selektiven Laserschmelzens aus feinem Metallpulver unter Einwirkung eines Laserstrahls schichtweise ein gewünschtes Bauteil hergestellt. Die Herstellung kann hierbei direkt aus sogenannten 3D-CAD-Daten erfolgen, sodass voll funktionsfähige Bauteile aus hochwertigen Metallen hergestellt werden können.

Neben der in Figur 1 nur schematisch dargestellten Laservorrichtung 5 ist weiter im Wesentlichen eine Auftragsvorrichtung zum Auftragen einer Metallpulverschicht Teil der Druckeinrichtung, darüber hinaus ein Pulver-Vorratsbehältnis, wie weiter auch ein Pulver-Sammelbehältnis, in welches hinein überschüssige Partikel abgestreift werden können.

Die Herstellung des Metallteils erfolgt in einer rundum geschlossenen Kabine 4, wozu diese gegebenenfalls mit einer die Kabine 4 verschließenden Tür 6 oder dergleichen versehen sein kann.

Bezüglich des Herstellungsvorganges wird beispielsweise auf die eingangs zitierte die DE 10 2017 206 792 A1 verwiesen.

Während des Druckvorganges erfolgt bevorzugt eine Regenerierung der Atmosphäre in der Kabine 3. Hierzu wird bevorzugt im Umwälzverfahren ein gasförmiges Prozessgas 7, das bevorzugt ein Schutzgas wie etwa Argon oder Stickstoff ist, in die Kabine 4 eingeblasen und zugleich abgesogen. Hierzu dient bevorzugt ein Gebläse 8, beispielsweise in Art eines Umwälzgebläses. Bei dem Gebläse 8 kann es sich um einen sogenannten Seitenkanalverdichter oder dergleichen handeln.

In dem dargestellten Ausführungsbeispiel ist das Gebläse 8 in dem Filtermodul 3 unter räumlicher Zuordnung zu den Filtereinrichtungen 2 angeordnet.

Hinsichtlich des Verfahrens zur Abreinigung des Filters wie auch bezüglich der Ausbildung der Filtereinrichtung wird auf die eingangs erwähnte DE 10 2019 132 349 A1 verwiesen. Der Inhalt dieser Patentanmeldung wird hiermit voll inhaltlich in die Offenbarung vorliegender Erfindung mit einbezogen, auch zu dem Zweck, Merkmale dieser Patenanmeldung in Ansprüche vorliegender Erfindung mit einzubeziehen.

Wie weiter auch insbesondere aus der schematischen Darstellung in Figur 1 zu erkennen, ist das Gebläse 8 über eine Druckleitung 9 und eine Saugleitung 10 sowie einen Einlass 55 und einen Auslass 56 mit dem Kabineninneren strömungsmäßig verbunden.

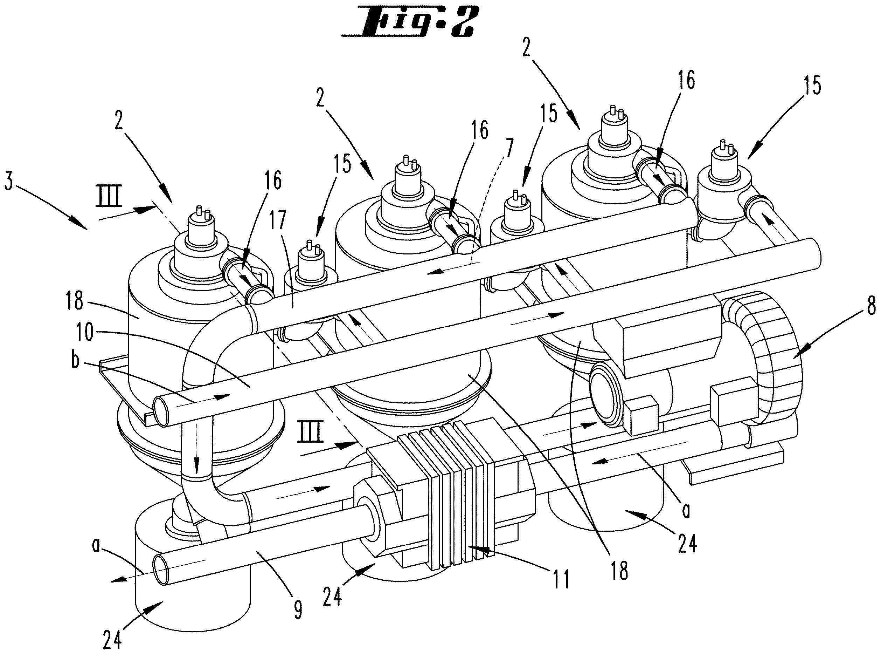

Hierbei kann die Druckleitung 9, ausgehend von dem Gebläse 8, unmittelbar, gegebenenfalls, wie in Figur 2 dargestellt, unter Zwischenschaltung eines Mediumkühlers 11, in die Kabine 3, bevorzugt zugeordnet einem Deckenbereich der Kabine 3, münden. Im Betrieb ergibt sich in der Druckleitung 9 eine Richtung a der Druckströmung des Mediums 7.

In die Saugleitung 10, entsprechend einer in Strömungsrichtung des Prozessgases 7 vor dem Gebläse 8, ist zumindest eine Filtereinrichtung 2 eingeschleift. Gemäß dem dargestellten Ausführungsbeispiel können mehrere Filtereinrichtungen 2, hier deren drei, vorgesehen sein.

Die Filtereinrichtungen 2 können zusammen mit dem Gebläse 8 und dem gegebenenfalls vorgesehenen Mediumkühler 11, darüber hinaus weiter gegebenenfalls mit einem optional vorsehbaren Vorabscheider und/oder einem Feinstfilter zusammengefasst in dem Filtermodul 3 angeordnet sein. Dieses Filtermodul 3 kann ein Filtergehäuse 14 aufweisen, welches die vorbeschriebenen Elemente umfasst. Es können sich lediglich zwei Schnittstellen jeweils zugeordnet der Druckleitung 9 und der Saugleitung 10 ergeben.

Ein gegebenenfalls vorgesehener Vorabscheider kann in Strömungsrichtung des Prozessgases 7 betrachtet vor der einen Filtereinrichtung 2 bzw. vor den mehreren Filtereinrichtungen 2 vorgesehen sein, während ein Feinstfilter bezüglich der Filtereinrichtung 2 in Strömungsrichtung nachgeschaltet sein kann.

In der Saugleitung 10 ergibt sich bei einem üblichen Fertigungsprozess und einer damit einhergehenden Prozessgasumwälzung eine Richtung b der Saugströmung.

Die Filtereinrichtungen 2 sind bevorzugt in im Wesentlichen identischer Ausführung vorgesehen, hierbei jeweils einen Mediumeinlass 15 und einen Mediumauslass 16 aufweisend. Über den jeweiligen Mediumeinlass 15 ist jede Filtereinrichtung 2 bevorzugt unmittelbar mit der Saugleitung 10 verbunden. Die Mediumauslässe 16 der Filtereinrichtungen 2 münden in eine Saugübergangsleitung 17, die, gegebenenfalls unter Zwischenschaltung des Feinstfilters, zu dem Gebläse 8 führt (siehe insbesondere Figur 2).

Der Feinstfilter kann beispielsweise auch in Strömungsrichtung endseitig der Druckleitung 9, gegebenenfalls auch noch in Strömungsrichtung nach dem Mediumkühler 11 vorgesehen sein.

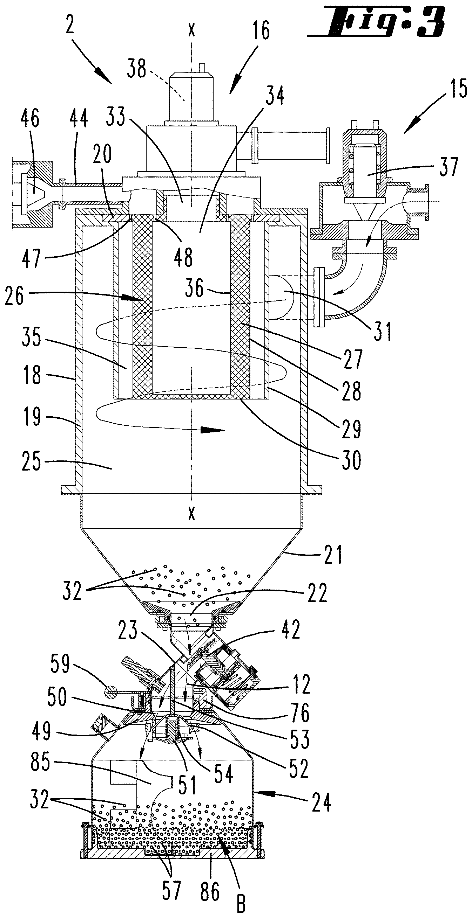

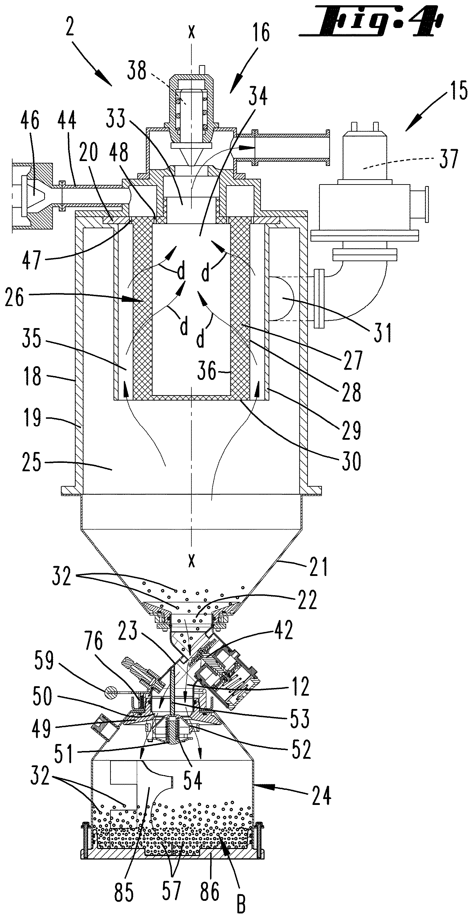

Die Figuren 3 und 4 zeigen jeweils eine - mit Bezug auf die übliche Betriebsstellung der Filtereinrichtung 2 - Vertikalschnittdarstellung durch eine der Filtereinrichtungen 2 im Regenerationsbetrieb, in welchem eine Filterung des aus der Kabine 4 ausgetragenen, beispielsweise durch Schmauch verunreinigten Mediums 7 durchgeführt wird.

Wie beispielsweise aus der Schnittdarstellung in Figur 3 ersichtlich, kann die Filtereinrichtung 2 ein etwa kreiszylinderförmiges Filtergehäuse 18 aufweisen, mit einer umlaufenden Gehäusewandung 19 und einer Gehäusedecke 20. Der Gehäuseboden 21 kann trichterförmig gestaltet sein mit einer zentralen Bodenöffnung 22, an die sich ein Schleusenabschnitt 23 zu einem von dem Filtergehäuse 18 abnehmbaren Filtergut-Sammelkammer 24 anschließen kann.

Zwischen dem Filtergehäuse 18 und einem in dem Schleusenabschnitt 23 ausgebildeten Kanalabschnitt 12 ist ein über eine Druckfeder 54 in eine Schießstellung belastetes Schleusenventil 51 angeordnet.

Unterseitig der Gehäusedecke 20 kann gemäß den Darstellungen ein in den Innenraum 25 des Filtergehäuses 18 einragender Filter 26 angeordnet sein. Dessen Filterwandung kann, wie auch dargestellt, rohrartig, kreiszylindrisch ausgebildet sein, mit einer zentralen Längsachse x, die in üblicher Anordnungsstellung entlang einer Vertikalen ausgerichtet ist. Die Längsachse x des Filters 26 kann entsprechend dem dargestellten Ausführungsbeispiel zugleich die zentrale Längsachse des Filtergehäuses 18 insgesamt bilden.

Der Filter 26 ist mit Abstand zu der Außenfläche 28 der Filterwandung 27 umgeben von einer bevorzugt konzentrisch zur Längsachse x ausgerichteten Leitwandung 29. Diese Leitwandung 29 ist, wie auch der Filter 26, unterseitig der Gehäusedecke 20 quasi abgehängt und bevorzugt strömungsdicht mit dieser verbunden. Der sich zwischen der Leitwandung 29 und der Filterwandung 27 ergebende Ringraum 35 ist in Achsrichtung betrachtet hin zu dem Innenraum 25 offen ausgebildet, während die diesbezügliche, im üblichen Betrieb nach unten weisende Stirnfläche 30 des Filters 26 von der Strömung, insbesondere von dem Prozessgas 7 nicht durchdringbar ausgebildet ist. Hierbei abgeschiedenes Filtergut 32 kann allein schwerkraftabhängig durch die Bodenöffnung 22 des Gehäusebodens 21, den Kanalabschnitt 12 des Schleusenabschnitts 23 durchsetzend in die Sammelkammer 24 abfallen. Ein zwischen dem Schleusenabschnitt 23 und dem Aufnahmeraum der Sammelkammer 24 vorgesehenes Schleusenventil 51 ist dabei in einer Offenstellung gehalten.

Die Einlassöffnung 31 des Mediumeinlasses 15 kann, wie auch bevorzugt, in der Gehäusewandung 19 vorgesehen sein, so dass sich eine zumindest annähernd tangentiale Einströmung des Mediums 7 in den Innenraum 25 des Filtergehäuses 18 ergeben kann, wodurch zunächst eine wirbelartige Vorabscheidung von Filtergut 32 erreicht wird (vergleiche Figur 3). Die Filtereinrichtung 2 wirkt hierbei zunächst in Art eines Zyklonabscheiders, in dem die Prozessgasströmung von der Einlassöffnung 31 ausgehend wirbelartig in dem sich zwischen der Leitwandung 29 und der Gehäusewandung 19 ergebenden Ringraum geführt ist.

Die Auslassöffnung 33 des Mediumauslasses 16 kann gemäß dem dargestellten Ausführungsbeispiel im Bereich der Gehäusedecke 20 vorgesehen sein, insbesondere, wie weiter auch bevorzugt, zentral, die Längsachse x aufnehmend und weiter zugeordnet dem durch die Filterwandung 27 umschlossenen Filterinnenraum 34.

Zufolge der sich im üblichen Betrieb (Filterbetrieb) der Filtereinrichtung 2 ergebenden Saugströmung wird das in den Innenraum 25 eingesaugte Prozessgas 7 nach der wirbelartigen Umlenkung zugeordnet der nach unten weisenden Stirnfläche 30 des Filters 26 von unten in den Ringraum 35 zwischen der Filterwandung 27 und der Leitwandung 29 gesaugt, wonach sich eine Durchdringung der Filterwandung 27 von der Außenfläche 28 zu der Innenfläche 36 der Filterwandung 27 ergibt (siehe Pfeile d in Figur 4), sodass das gefilterte Medium 7 den Filterinnenraum 34 erreicht und über die Auslassöffnung 33 die Filtereinrichtung 2 verlässt (vergleiche Figur 4).

Hierbei abgeschiedenes Filtergut 32 kann in der Filterwandung 27 verhaftet sein. Gegebenenfalls im Zuge dieser Filterung durch den Ringraum 35 abfallendes Filtergut 32 wird bevorzugt in der Filtergut-Sammelkammer 24 gesammelt.

Die Filtergut-Sammelkammer 24 ist vor der Inbetriebnahme mit einem Festkörpermaterial 57, beispielsweise in Form eines Glasgranulats, als Brandhinderungsmittel B befüllt, sodass insbesondere der Boden der Sammelkammer 24 von diesem Brandhinderungsmittel B bedeckt ist.

Wie aus den Schnittdarstellungen beispielsweise in den Figuren 3 und 4 ersichtlich können der Mediumeinlass 15 und der Mediumauslass 16 jeweils mit einem Sperrventil 37 beziehungsweise 38 versehen sein, um so die Filtereinrichtung 2 zufolge Abriegelung gegenüber der Saugleitung 10 und der Saugübergangsleitung 17 aus dem Regenerationsbetrieb zu nehmen. Die Regeneration des Prozessgases 7 bei weiter im Betrieb befindlicher Metall-Druckeinrichtung 1 wird in einem solchen Zustand allein übernommen durch die weiteren Filtereinrichtungen 2 des Filtermoduls 3. So kann ein zumindest annähernd kontinuierlicher Betrieb der Metall-Druckeinrichtung 1 auch bei einem Ausfall oder einer bewussten Absperrung einer Filtereinrichtung 2, beispielsweise zur Reinigung derselben, sichergestellt werden.

Hierzu werden die bevorzugt pneumatisch betätigbaren Absperrventile 37 und 38 des Mediumeinlasses 15 und des Mediumauslasses 16 in eine Sperrstellung verbracht. Die diesbezügliche Ansteuerung der Absperrventile 37 und 38 kann, wird auch bevorzugt, über eine nicht näher dargestellte Steuerelektronik 39 erfolgen, die auch Teil des Filtermoduls 3 sein kann.

Zur Abreinigung des Filters 26 in der Filtereinrichtung 2 und zum Ablösen des sich im Zuge der Filterung des Prozessgases 7 absetzenden Filterkuchens an der Filterwandung 27 ist die Filtereinrichtung 2 in einen Regenerationsbetrieb versetzbar. Hierzu kann die Filtereinrichtung 2, wie vorbeschrieben, zunächst aus dem Durchlauf von Prozessgas entnommen bzw. gegenüber den Leitungen abgesperrt zufolge Schließen der Absperrventile 37 und 38 und somit Verschluss des Mediumeinlasses 15 und des Mediumauslasses 16.

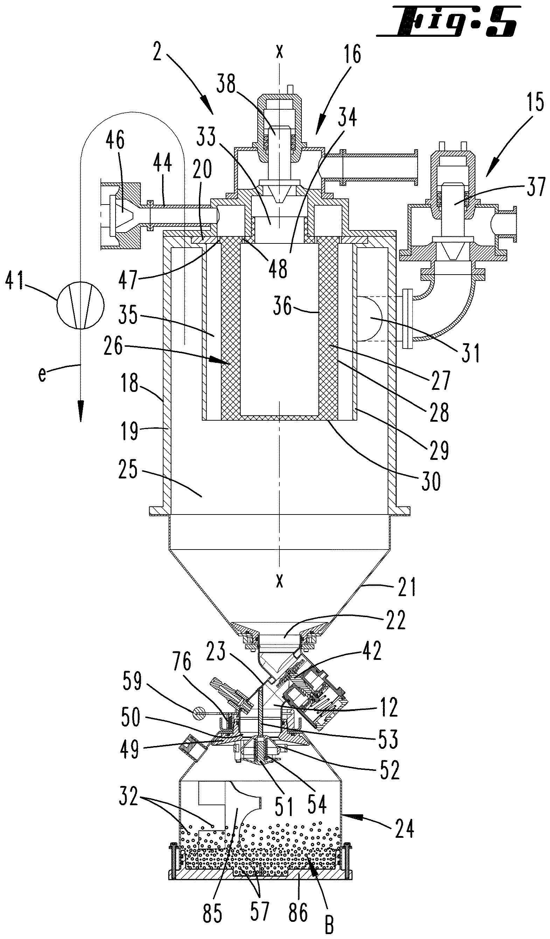

Über eine gesonderte Pumpe, insbesondere Vakuumpumpe 41, wird zur Vorbereitung des Abreinigungsvorganges zunächst in dem Filtergehäuse 18 ein Unterdruck erzeugt. Dabei wird der Innenraum 25 des Filtergehäuses 18 und darüber hinaus auch der zu diesem Innenraum 25 hin offene Innenraum der Filtergut-Sammelkammer 24 evakuiert (siehe schematische Darstellung in Figur 5 - Pfeil e).

Bei der Vakuumpumpe 41, die bevorzugt auch Teil des Filtermoduls 3 sein kann, kann es sich, wie weiter auch bevorzugt, um eine beispielsweise ölgeschmierte Vakuumpumpe handeln, wie diese beispielsweise aus der DE 10 2015 107 721 A1 bekannt ist.

Nach Erreichen eines Unterdrucks von beispielsweise 500 mbar bis hin zu weiter beispielsweise 1 mbar im Bereich des Innenraumes 25 (erfassbar über einen Drucksensor) wird über die Steuerelektronik 29 der Absaugvorgang über die Vakuumpumpe 41 gestoppt und hiernach ein beispielsweise im Bereich des Schleusenabschnitts 23 zwischen dem Filtergehäuse 18 und der Filtergut-Sammelkammer 24 angeordnetes Ausschleusventil 42 geschlossen. Das Ausschleusventil 42 unterbricht die Leitungsverbindung zwischen dem den Filter 26 aufweisenden Innenraum des Filtergehäuses 18 und dem Innenraum der Filtergut-Sammelkammer 24.

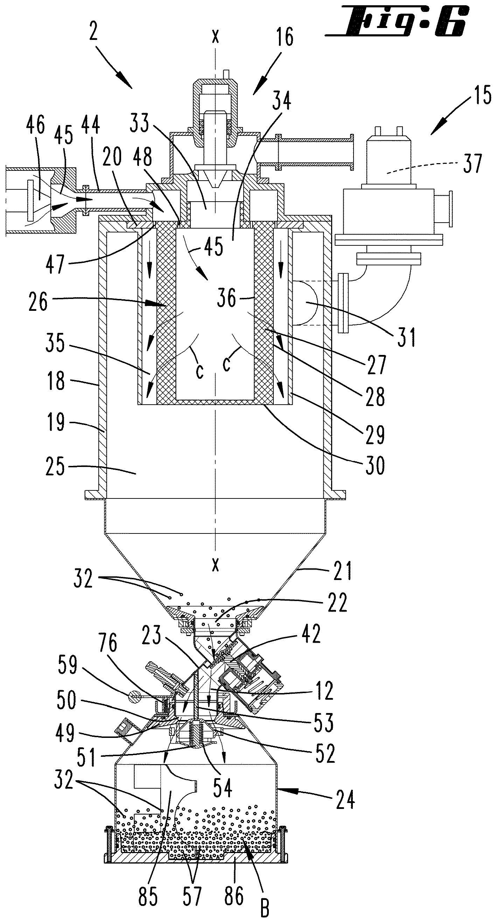

Über einen gesonderten Spülmediumspeicher 43, der auch Teil des Filtermoduls 3 sein kann, wird zur Abreinigung des Filters 26 über eine Spülleitung 44 ein Spülmedium 45 in Richtung auf die Filterwandung 27 eingebracht. Das Einbringen des Spülmediums 45 kann über ein bevorzugt elektrisch betätigbares Steuerventil 46 ausgelöst werden (siehe Figur 6). Das Steuerventil 46 kann über die Steuerelektronik 39 angesteuert werden.

Zufolge von beispielsweise in einer Mehrzahl um die Längsachse x herum vorgesehenen Spülmediumeinlässen 47 und 48 in der Gehäusedecke 20 ist das Spülmedium 45 einbringbar, wobei gemäß den Darstellungen über die Spülmediumeinlässe 48 das Spülmedium 45 derart in den Filterinnenraum 34 eingeleitet wird, dass dieses die Filterwandung 27 in einer Richtung c entgegen der Durchströmrichtung des Mediums 7 im üblichen Filterbetrieb (Richtung d - vergleiche Figur 4) durchsetzt. Es wird so entsprechend eine Durchsetzung der Filterwandung 27 von dem Spülmedium 45 von der Innenfläche 36 in Richtung auf die Außenfläche 28 erreicht.

Zugleich oder auch zeitlich versetzt zu der vorbeschriebenen Strömung wird über den radial äußeren Spülmediumeinlass 47 das Spülmedium 45 im Wesentlichen entlang der Außenfläche 28 der Filterwandung 27 eingeleitet (Richtung f), um so das insbesondere über den Spülmediumanteil, der die Filterwandung 27 von innen nach außen durchsetzt, gelöste Filtergut 32 sicher aus dem Ansaugbereich in Richtung auf den Gehäuseboden 21 abzutragen.

Die Einleitung des Spülmediums 45 kann allein zufolge Einsaugen aufgrund des gegenüber der Umgebung in dem Innenraum 25 des Filtergehäuses 18 herrschenden Unterdrucks erreicht sein, kombinativ hierzu aber gegebenenfalls auch durch ein Einblasen des Spülmediums 45 in den Innenraum 25. Durch den Unterdruck im Innenraum 25 ist eine günstige Spülmedium-Strömung über und durch die Filterwandung 27 sichergestellt.

Zum Ende des Abreinigungsvorganges herrscht in dem Innenraum 25 des Filtergehäuses 18 bevorzugt wieder der gleiche Druck, wie in den angeschlossenen Leitungen (Saugleitung 10 und Saugübergangsleitung 17), sodass beim Öffnen der Sperrventile 37 und 38, wodurch in diesem Beispielsfall das Wiedereinbinden der abgereinigten Filtereinrichtung in den Filterungsprozess erreicht wird, keine Rückströmung entgegen der üblichen Strömungsrichtung des Prozessgases 7 stattfindet.

Als Spülmedium 45 wird bevorzugt dasselbe Medium genutzt, das als Prozessgas auch zum Abtrag von Verunreinigungen in der Kabine 4 der Metall-Druck-einrichtung 1 genutzt ist. So steht als Spülmedium 45 bevorzugt Argon und/oder Stickstoff genutzt.

Durch ein erneutes Evakuieren kann ggf. unmittelbar nach einem ersten Reinigungsvorgang auch ein zweiter Reinigungsvorgang nachgeschaltet werden.

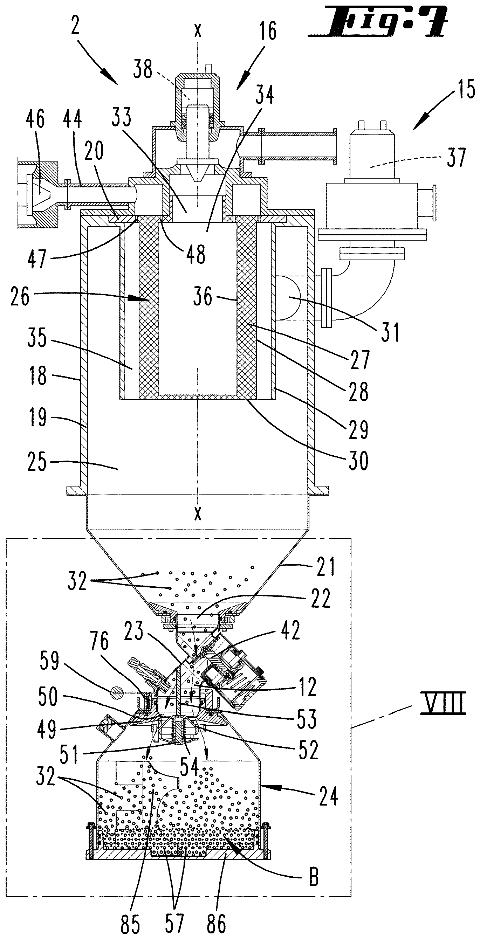

Mit Beendigung des Abreinigungsvorganges und dem damit einhergehenden Druckausgleich in dem Innenraum 25 des Filtergehäuses 18 ergibt sich zwischen dem Innenraum 25 und dem Innenraum der Filtergut-Sammelkammer 24 ein Druckunterschied, der mit Öffnen des Ausschleusventils 42 ein Absaugen der während des Abreinigungsprozesses gelösten und bevorzugt gehäusebodenseitig gesammelten Filterguts 32 in die Filtergut-Sammelkammer 24 bewirkt. Entsprechend wird bereits allein durch Öffnen des Ausschleusventils 42 eine Übertragung des gelösten Filtergutes 32 in die Sammelkammer ausgelöst (vergleiche Figur 7 - Pfeil g). Der Absaugvorgang hält bis zu einem Druckausgleich zwischen dem Innenraum 25 und der Sammelkammer 24 an. Darüber hinaus kann Filtergut 32 auch schwerkraftabhängig in die Sammelkammer 24 abrieseln.

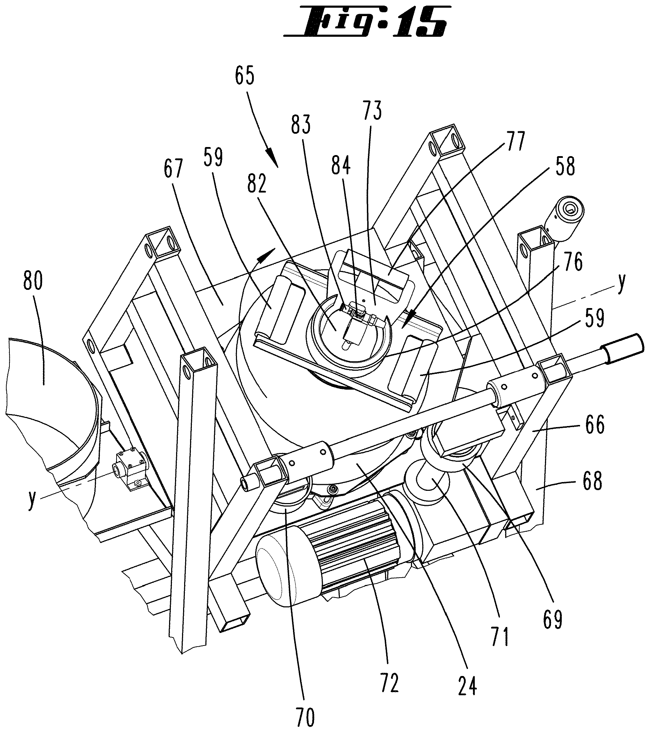

Aus dieser Filtergut-Sammelstellung gemäß Figur 7 heraus kann die Filtereinrichtung 2 zufolge Öffnen der Sperrventile 37 und 38 im Mediumeinlass 15 und im Mediumauslass 16 wieder in den Filterkreislauf des Filtermoduls 3 eingeschleust werden (vgl. Figur 15).

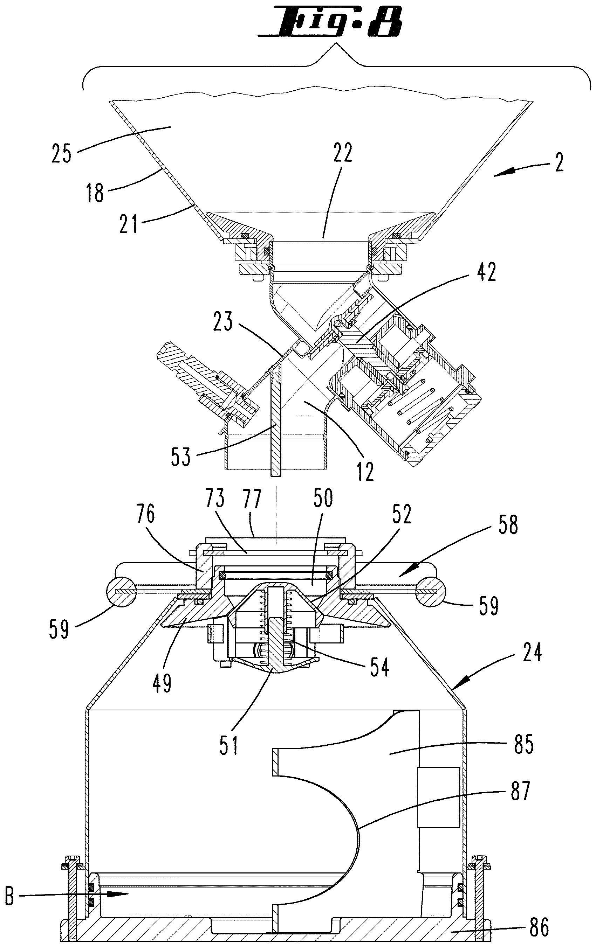

Zur Entsorgung des in der Filtergut-Sammelkammer 24 gesammelten Filterguts 32 aus bevorzugt einer Mehrzahl an Filter-Abreinigungsvorgängen ist die Filtergut-Sammelkammer 24 von dem Filtergehäuse 18 entfernbar. Hierzu kann das rohrförmige freie Ende des Schleusenabschnitts 23 zur strömungsdichten Aufnahme eines Muffenabschnitts 49 der Sammelkammer 24 ausgebildet sein (vergleiche Figur 8). Die von dem Muffenabschnitt 49 umgebene Kammeröffnung 50 ist bevorzugt verschließbar mittels des Schleusenventils 51. Ein in Richtung auf den Schleusenabschnitt 23 gerichteter Ventilkegel 52 kann dabei in der Andockstellung der Sammelkammer 24 an dem Filtergehäuse 18 gemäß Figur 7, unmittelbar abgestützt sein an einem Niederhalter 53 im Bereich des Schleusenabschnitts 23, sodass das Schleusenventil 51 in einer die Kammeröffnung 50 freigebenden Stellung gehalten ist. Der Niederhalter 53 kann gemäß den Darstellungen fingerartig sich erstrecken, dabei den Kanalabschnitt 12 durchsetzend.

Im Zuge des Abnehmens der Filtergut-Sammelkammer 24 von dem Schleusenabschnitt 23, beispielsweise zufolge Abschrauben oder weiter beispielsweise nach Aufhebung einer Verrastung, verliert der Ventilkegel 52 die Abstützung an dem Niederhalter 53 des Schleusenabschnitts 23, zufolge dessen das Schleusenventil 51 unter Beaufschlagung der Druckfeder 54 selbsttätig in eine die Kammeröffnung 50 verschließende Stellung fällt.

Bevorzugt erfolgt eine Entfernung der Filtergut-Sammelkammer 24 bei geschlossenem Ausschleusventil 42, sodass bei Abnahme der Sammelkammer die Atmosphäre im Innenraum 25, im Wesentlichen gebildet durch das Medium 7, erhalten bleibt. Auch bleibt durch die Absperrung des Innenraumes der Filtergut-Sammelkammer 24 durch das Schleusenventil 51 das hierin aufgenommene Filtergut 32 unter Prozessgasatmosphäre, entsprechend unter einer durch das Prozessgas 7 bzw. das Spülmedium 45 gebildeten Atmosphäre.

Nach einer gegebenenfalls vorgegebenen Anzahl von Abreinigungs-Zyklen wird die Filtergut-Sammelkammer 24 von der Filtereinrichtung 2 abgenommen und der Inhalt (gesammeltes reaktives Filtergut 32 und Festkörpermaterial 57 beziehungsweise Brandhinderungsmittel B) einer Entsorgung zugeführt. Dieser Entsorgung vorgeschaltet ist eine Station zur Passivierung des Filterguts 32.

Weiter kann die Sammelkammer 24 wandungsaußenseitig, beispielsweise im Bereich des Muffenabschnittes 49 quer zur Längsachse x ausgerichtete stangenartige Handhabungsteile 59 aufweisen. Diese Handhabungsteile 59 können zum Transport der Sammelkammer 24 von Hand oder mittels eines Fahrgeräts 60 dienen. Darüber hinaus kann ein Abschnitt der Handhabungsteile 59 als quer zur Längsachse x schiebeverlagerbare Handhabe 77 ausgebildet sein, zur Einwirkung auf einen der Verrastung der Filtergut-Sammelkammer 24 an dem Schleusenabschnitt 23 dienenden Schiebers 73. Durch Ziehen der Handhabe 77 nach - bezogen auf die Längsachse x - radial außen, ist die Verrastung aufhebbar.

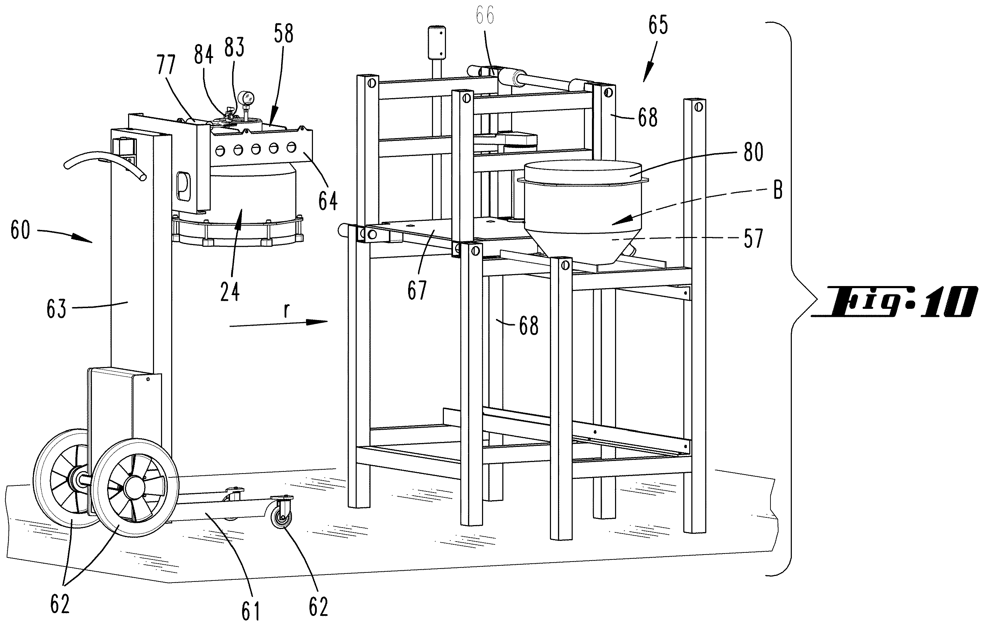

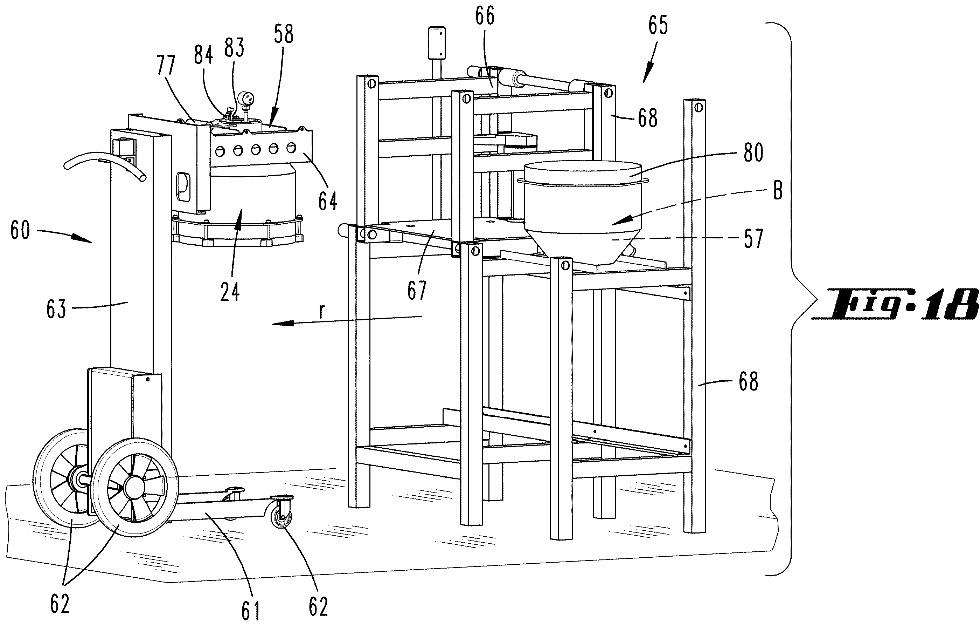

Wie in den Figuren 10 und 18 bis 28 dargestellt, ist ein Transport der von der Filtereinrichtung 2 abgenommen Sammelkammer 24 unter Nutzung eines staplerartigen Fahrgeräts 60 bevorzugt.

Das Fahrgerät 60 weist bevorzugt ein bodennahes Fahrgestell 61 mit Rädern 62 auf. Auf dem Fahrgestell 61 ist im Wesentlichen vertikal ausgerichtet ein Hubmast 63 befestigt, an welchem entlang, beispielsweise über eine Hubkette angetrieben, im Wesentlichen horizontal ausgerichtete Gabelzinken 64 in Vertikalrichtung verlagerbar angeordnet sind. Die Gabelzinken 64 sind ausgelegt zur sicheren Erfassung der Sammelkammer 24, insbesondere deren Handhabungsteile 59. So kann diesbezüglich beispielsweise mit Erfassen der Handhabungsteile 59 eine Klemmung oder Verrastung gegeben sein.

Wie ersichtlich, erfasst das Fahrgeräts 60 gemäß der Darstellung in Figur 10 die Sammelkammer 24 im Bereich der Handhabungsteile 59. Mit dieser Erfassung kann eine gegebenenfalls vorgesehene Verrastung der Sammelkammer 24 an dem Schleusenabschnitt 23 der Filtereinrichtung 2 aufgehoben werden, sodass hiernach die Sammelkammer 24 mittels des Fahrgeräts 60 transportiert werden kann.

Im Zuge des Abnehmens der Filtergut-Sammelkammer 24 von dem Schleusenabschnitt 23 oder gegebenenfalls unmittelbar danach kann durch Betätigung und Rückverlagerung des Schiebers 73 die Kammeröffnung 50 mit einem separaten Deckel 58 verschlossen werden.

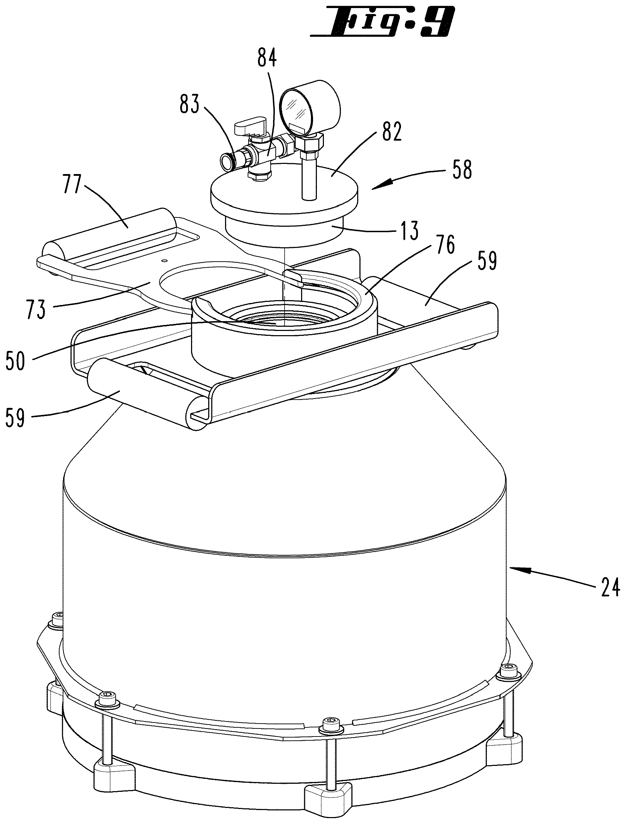

Der Deckel 58 ist ausgebildet zum Verschluss der Kammeröffnung 50 der Filtergut-Sammelkammer 24, wozu der Deckel 58 zunächst und im Wesentlichen einen mit einem an den Durchmesser der Kammeröffnung 50 im Bereich des Muffenabschnitts 49 angepassten Außendurchmesser versehenen Topfabschnitt 13 aufweist, der unterseitig eines tellerartigen sich in der Verschlussstellung auf dem zugewandten Kragen 76 des Muffenabschnitts 49 abstützenden Deckenabschnitts 82 bevorzugt einstückig und weiter bevorzugt materialeinheitlich angeformt ist (vergleiche Figur 9).

Durchsetzt ist der Deckel 58 von einer Rohrleitung 83, die den Innenraum der Sammelkammer 24 - bei geöffnetem Schleusenventil 51 - über eine weiter angeschlossene Leitung mit einer Pumpe, beispielsweise einer Vakuumpumpe - verbindet.

In der Rohrleitung 83 kann, wie auch bevorzugt, ein Absperrventil 84 vorgesehen sein.

Die Filtergut-Sammelkammer 24 wird bevorzugt einer Station 65 zugeführt. Diese Station 65 dient bevorzugt zum Passivieren des Sammelkammer-Inhalts, kann darüber hinaus, wie auch bevorzugt und dargestellt, einen Brandhinderungsmittel-Vorrat zur Befüllung der Sammelkammer 24 vor einer Inbetriebnahme der Sammelkammer 24 aufweisen.

So kann die Station 65 eine Aufnahmeeinrichtung 66 aufweisen, in welche die bevorzugt mittels des Fahrgeräts 60 transportierte Filtergut-Sammelkammer 24 abgestellt werden kann.

Die Aufnahmeeinrichtung 66 kann, wie auch dargestellt, gitterboxartig gebildet sein, bevorzugt aufweisend einen Aufsetzboden 67 und eine zu einer Vorderseite der Station 65 gerichteten Einsetz- beziehungsweise Entnahmeöffnung.

Weiter ist die Aufnahmeeinrichtung 66 an dem Grundgerüst 68 der Station 65 um eine bevorzugt horizontal ausgerichtete Schwenkachse y schwenkbar gehaltert. Die Schwenkachse y erstreckt sich dabei bevorzugt quer zu einer Anfahrrichtung r des Fahrgeräts 60 im Zuge eines Anfahrens an die Station 65 (vergleiche Figur 10). Darüber hinaus erstreckt sich die Schwenkachse y bevorzugt im Wesentlichen mittig des Aufsetzbodens 67, diesen durchsetzend oder unterhalb des Aufsetzbodens 67 verlaufend. Der diesbezügliche Achskörper stützt sich auf einer Quertraverse mittig des Aufsetzbodens 67 ab, ist darüber hinaus in diesem Bereich gelagert.

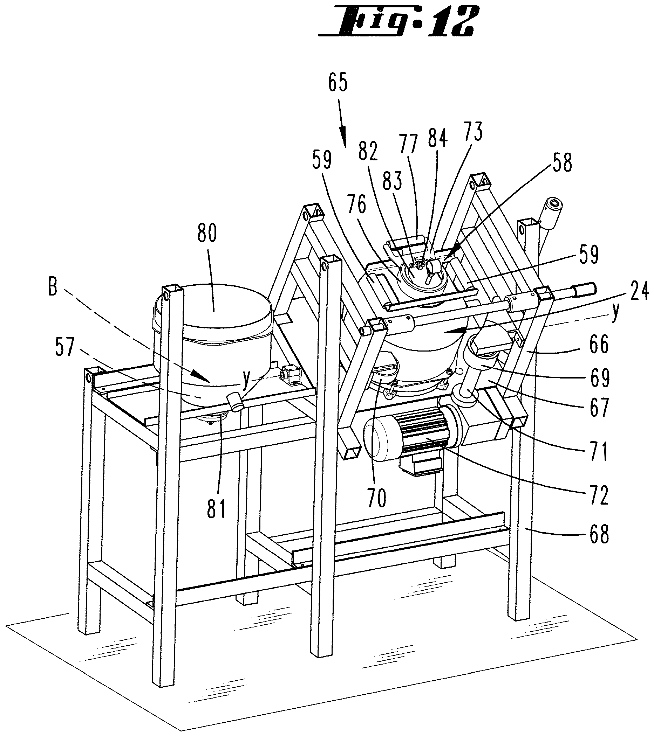

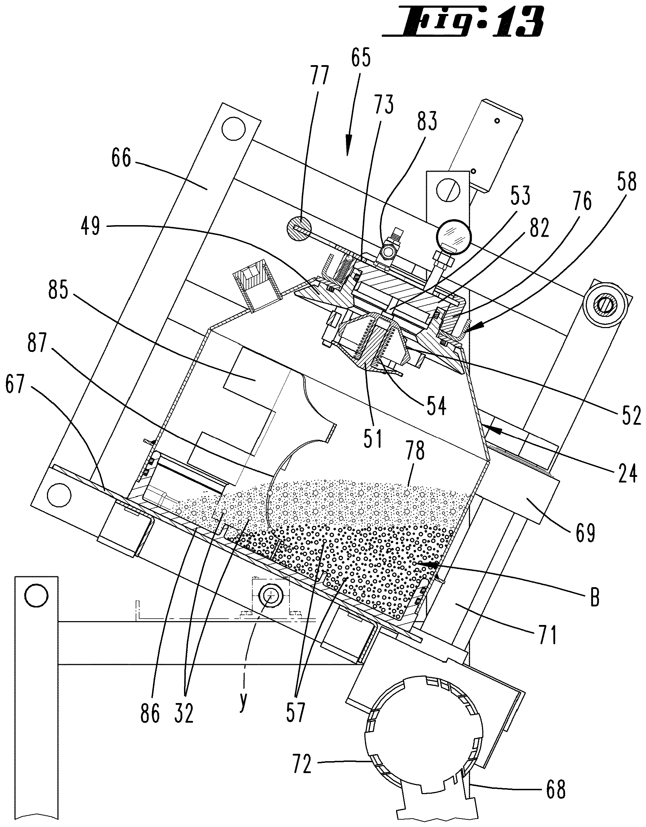

Die Grundstellung der Aufnahmeeinrichtung 66, in welcher Grundstellung auch das Abstellen der Sammelkammer 24 auf dem Aufsetzboden 67 beziehungsweise die Entnahme der Sammelkammer 24 durchgeführt wird, ist bevorzugt anschlagbegrenzt, wie weiter gegebenenfalls auch eine Schwenkstellung gemäß Figur 12. In dieser Schwenkstellung kann, wie auch bevorzugt, eine Verschwenkung der Sammelkammer 24 um die quer zu ihrer Längsachse x ausgerichtete Schwenkachse y von etwa 45 Grad erreicht sein (siehe auch Figur 13).

In dieser Schwenkstellung kann die Sammelkammer 24 mit ihrer bevorzugt kreiszylindrischen Außenwandung an zumindest einer Antriebswalze 69 und einer Abstützwalze 70 anliegen. Die geometrischen Drehachsen dieser Walzen 69 und 70 sind bevorzugt senkrecht gerichtet zur Ebene des Aufsetzbodens 67 und somit in Parallelausrichtung zu der Längsachse x der Sammelkammer 24.

Die Antriebswalze 69 kann aktiv über eine Welle 71 angetrieben werden, beispielsweise (wie insbesondere aus den Darstellungen in den Figuren 12 und 13 ersichtlich) durch einen Elektromotor 72. Die sich insbesondere über ihr Gewicht auf den Walzen abstützende Sammelkammer 24 kann so zufolge Antrieb der Antriebswalze 69 insbesondere in der Schwenkstellung um die Längsachse x gedreht werden.

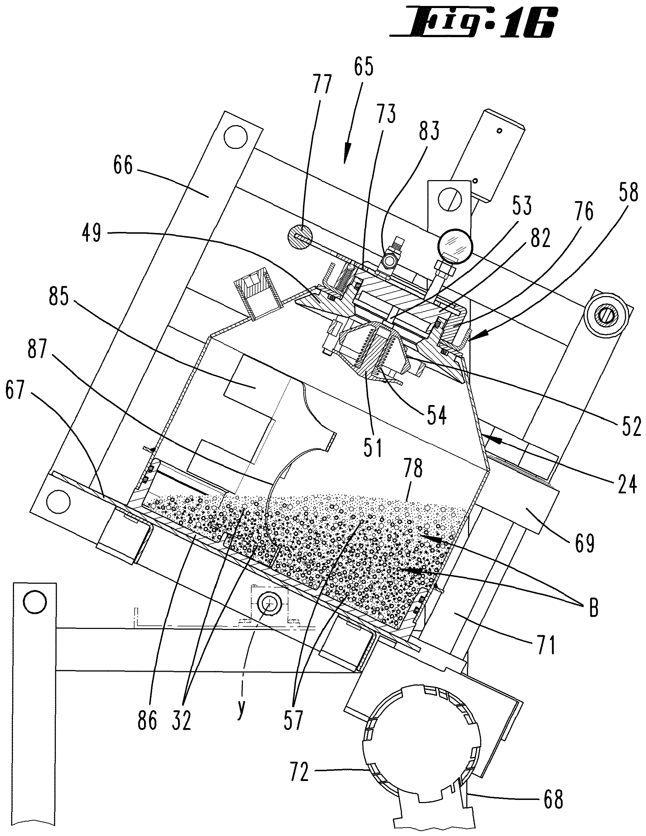

Wie insbesondere aus der schematischen Darstellung in Figur 16 gezeigt, wird bei einer derartigen Drehung der Sammelkammer 24 um deren Längsachse x in der Schwenkstellung in einem ersten Mischzyklus eine im Wesentlichen gleichmäßige Vermischung von Festkörpermaterial 57 und Filtergut 32 erreicht.

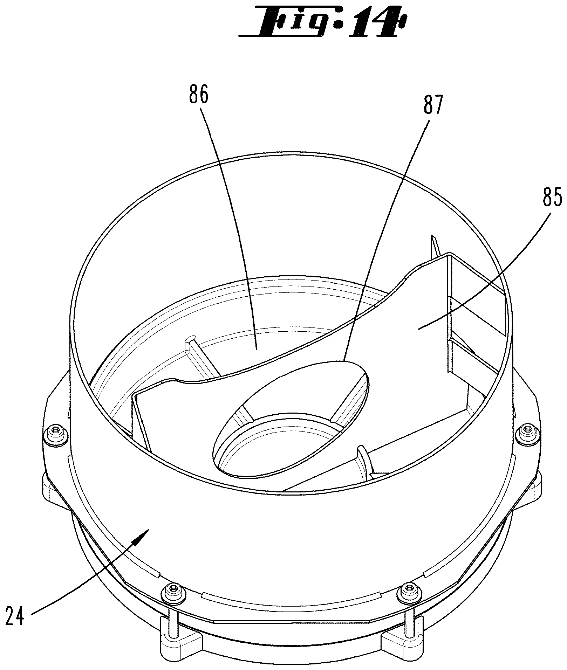

Wie weiter insbesondere Figur 14 zeigt, kann in der Sammelkammer 24 durch Einsetzen und Befestigen eines entsprechend geformten Blechteils eine Mischschaufel 85 vorgesehen sein, die mit Bezug auf einen im Wesentlichen kreisförmigen Grundriss der Sammelkammer 24 diese etwa entlang einer Durchmesserlinie durchsetzt und ausgehend von dem Kammerboden 86 sich etwa über die axiale Höhe eines kreiszylindrischen Kammerabschnitts erstreckt.

Die Mischschaufel 85 ist bevorzugt wandungsinnenseitig der Kammerwandung befestigt, beispielsweise angeschweißt.

Bezüglich ihrer flächigen Erstreckung weist die Mischschaufel 85 bevorzugt eine mittige Öffnung 87 auf. Diese kann eine ovale Grundrissform aufweisen, mit einer kürzeren, in Richtung der Längsachse x verlaufenden Achse und einer quer hierzu verlaufenden längeren Achse, wobei das Maß der längeren Achse etwa dem 0,5- bis 0,8-Fachen des freien inneren Durchmesserma-ßes der Sammelkammer 24 im Bereich der Mischschaufel 85 entsprechen kann und das Maß der kürzeren Achse etwa dem 0,5- bis 0,9-Fachen der längeren Achse.

Nach diesem ersten Mischzyklus, gegebenenfalls aber auch möglich in Überlagerung dazu, wird bevorzugt über die Rohrleitung 83, weiter insbesondere über eine hieran angeschlossene Vakuumpumpe, die weiter bevorzugt Bestandteil der Station 65, insbesondere der Aufnahmeeinrichtung 66 ist, in der Sammelkammer 24 ein Unterdruck erzeugt. Das zugehörige Absperrventil 84 ist dazu geöffnet.

Zumindest in dieser Evakuierungssituation ist bevorzugt das kammerseitige Schleusenventil 51 in der Offenposition gehalten, wozu der Deckel 58 in der angesetzten Stellung über einen Niederhalter 53 entgegen der Rückstellkraft der ventilseitigen Druckfeder 54 auf den Ventilkegel 52 einwirkt.

Mit Erreichen eines ausreichend großen Unterdrucks in der Sammelkammer 24 wird der Vakuumanschluss verschlossen und über eine Feinstdrossel eine strömungsmäßige Verbindung zur Umgebung geöffnet und der Drehvorgang der geschwenkten Sammelkammer 24 erneut gestartet, sofern dieser für die Evakuierung gestoppt wurde.

Aufgrund der intensiven Vermischung mit dem vergleichsweise feinen Festkörpermaterial 57 reagiert immer nur eine kleine Menge Filtergut 32 an der sich ergebenden Oberfläche 78 (vergleiche Figur 16) mit dem beispielsweise über die Feinstdrossel sehr langsam und kontrolliert einströmenden Luftsauerstoff aus der umgebenden Atmosphäre. Entsprechend wird sukzessive eine Passivierung des Filterguts 32 in der Sammelkammer 24 durchgeführt.

Durch das vorgeschlagene und beschriebene Verfahren ist ein Großteil des brandgefährdeten Filterguts 32 bei Anordnung der Filtergut-Sammelkammer 24 in der Mischstation von dem Brandhinderungsmittel B, hier insbesondere dem Festkörpermaterial 57, luftdicht eingeschlossen. Es reagiert stets nur ein kleiner Anteil an der Oberfläche der Filtergut-Festkörpermaterial-Mischung mit Luftsauerstoff. Die Reaktion zur Passivierung erfolgt entsprechend langsam, damit die mit der Reaktion stattfindende Temperaturerhöhung in der Sammelkammer 24 vergleichsweise gering ausfällt, so dass die entstehende Wärme allein über die Gehäusewände an die Umgebung abgegeben werden kann.

Bei einem beispielhaften Aufnahmevolumen der Filtergut-Sammelkammer 24 von etwa 20.000 cm³ kann eine solche Passivierung zufolge Durchmischung und gleichzeitiger Zufuhr von Luftsauerstoff über einen Zeitraum von weiter beispielsweise 2 Stunden bis hin zu 12 Stunden oder mehr vorgenommen werden.

Mit Beendigung dieses Passivierungsvorganges wird der Drehantrieb gestoppt und die Aufnahmeeinrichtung 66 um die Schwenkachse y zurück in die Ausgangsposition geschwenkt, sodass die Sammelkammer 24 frei auf dem Aufsetzboden 67 aufstehend zum weiteren Transport bereit ist.

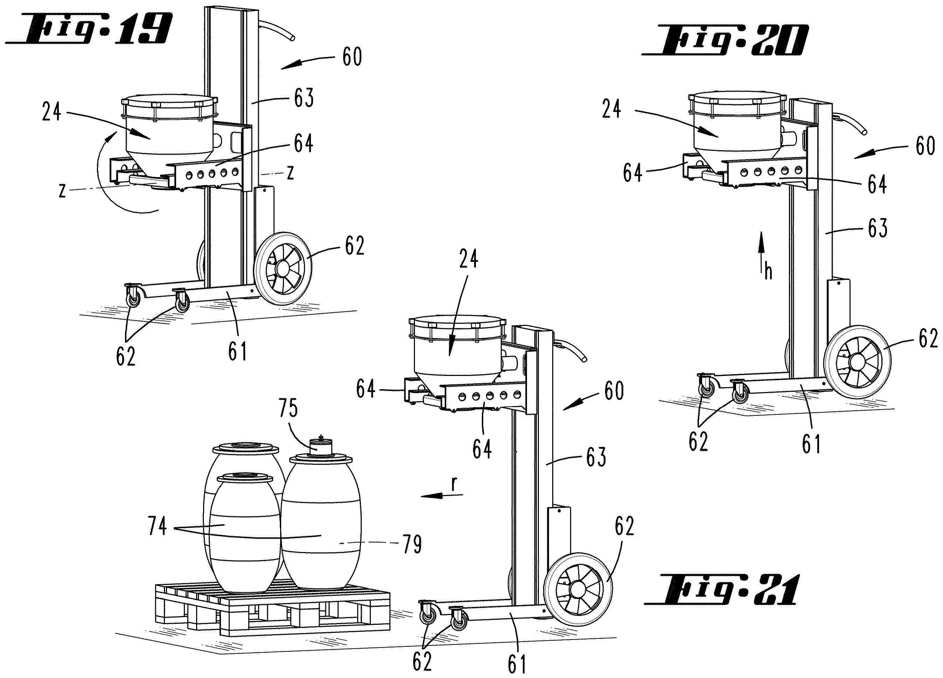

Auch dieser weitere Transport zu einem Transportbehälter 74 erfolgt bevorzugt über das Fahrgerät 60. Hierzu wird die Sammelkammer 24 bevorzugt erneut durch die Gabelzinken 64 im Bereich der Handhabungsteile 59 erfasst. Anschließend, gegebenenfalls im Zuge des Verfahrens des Fahrgerätes 60 in Richtung zu dem Transportbehälter 74, werden zusammen mit der Sammelkammer 24 die Gabelzinken 64 um eine quer zur Vertikalerstreckung des Hubmastes 63 gerichtete geometrische Schwenkachse z um bevorzugt 180 Grad geschwenkt, sodass hiernach die Kammeröffnung 50 der Sammelkammer 24 nach unten weist (vergleiche Figur 19).

Gegebenenfalls nach einem Anheben der Gabelzinken 64 und der hierüber getragenen Sammelkammer 24 entlang des Hubmastes 63 in eine Richtung h nach vertikal oben, wird der Transportbehälter 74 angefahren, in welchen der Inhalt des Sammelbehälters 24 entleert wird.

Der Transportbehälter 74 ist im Bereich seiner nicht dargestellten Einfüllöffnung mit einem rohrartigen Adapterabschnitt 75 versehen, welcher bevorzugt zur dichtenden Zusammenwirkung mit dem Muffenabschnitt 49 beziehungsweise der Kammeröffnung 50 der Sammelkammer 24 ausgebildet ist. Bevorzugt ist diesbezüglich die Ermöglichung einer dichten Verbindung, wie diese sich beispielsweise auch zwischen der Sammelkammer 24 und dem Schleusenabschnitt 23 der Filtereinrichtung 2 im Wesentlichen ergibt.

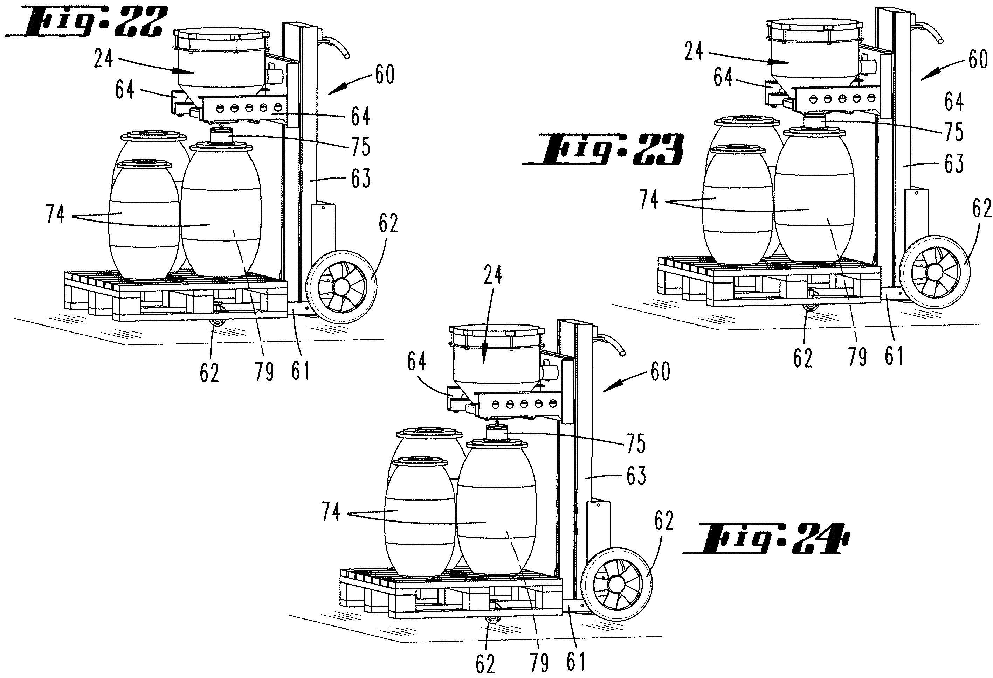

Auf den Adapterabschnitt 75 wird gemäß der schematischen Darstellung in Figur 24 durch entsprechendes Heranführen der Sammelkammer 24 unter Nutzung des Fahrgeräts die Sammelkammer 24 angedockt, sodass das in der Sammelkammer 24 aufgenommene passivierte und mit Festkörpermaterial 57 vermengte Filtergut 32 über die Kammeröffnung 50 in den jedenfalls zur umgebenden Atmosphäre abgesperrten Raum 79 des Transportbehälters 74 bevorzugt allein schwerkraftabhängig überführt werden kann.

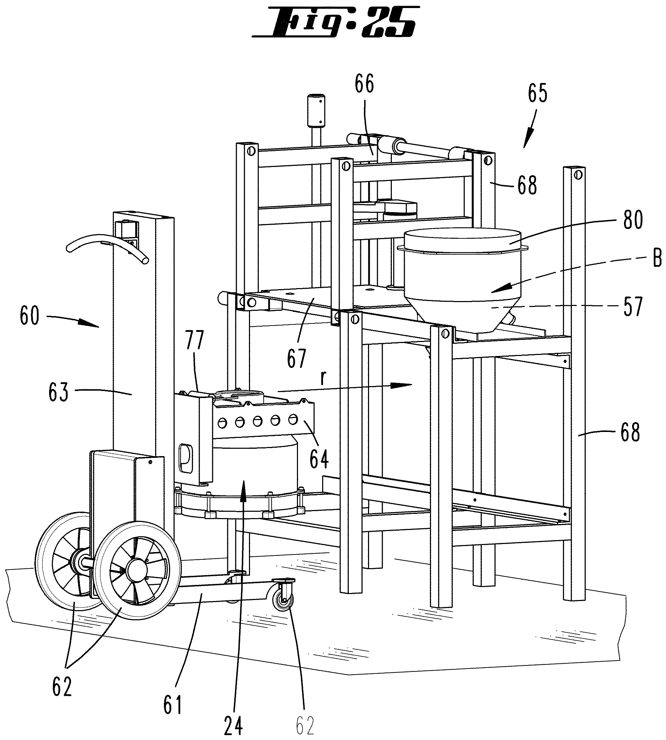

Die hiernach entleerte Sammelkammer 24 wird mittels des Fahrgeräts 60 nach Rückdrehen der Sammelkammer 24 in die Ausgangsstellung erneut der Station 65 zugeführt, nun aber zur Wiederbefüllung der Sammelkammer 24 mit Festkörpermaterial 57 (vgl. Figur 25).

Hierzu kann in der Station 65 beispielsweise benachbart zu der Aufnahmeeinrichtung 66 einen Vorratsbehälter 80 mit Brandhinderungsmittel B, beispielsweise Festkörpermaterial 57, vorgesehen sein, mit einem nach vertikal unten weisenden, bevorzugt absperrbaren Adapterabschnitt 81. Die Sammelkammer 24 wird entsprechend unterseitig des Vorratsbehälters 8 an diesen herangeführt, wobei abschließend durch Anheben der Sammelkammer 24 nach vertikal oben ein Andocken der Sammelkammer 24 mit ihrem Muffenabschnitt 49, gegebenenfalls mit dem deckelseitigen Stutzen 76, an dem Adapterabschnitt 81 erreicht wird.

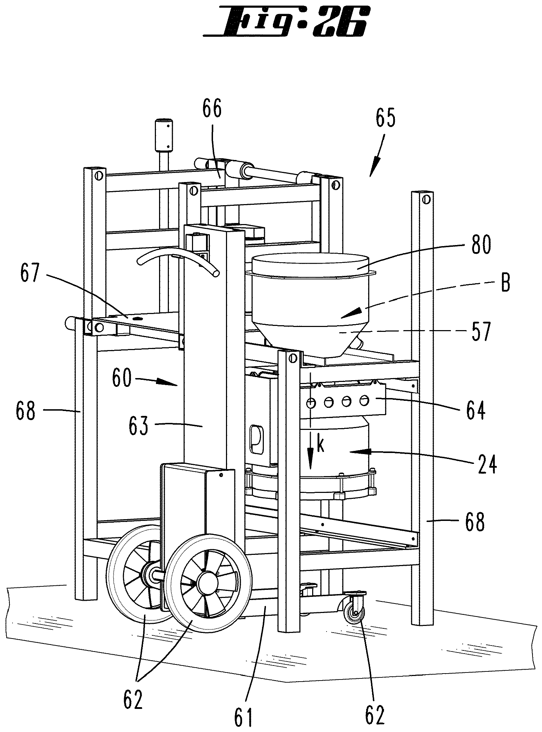

Gegebenenfalls durch gezielte Freigabe, beispielsweise schieberartiges Öffnen des Adapterabschnitts 81, kann eine bevorzugt vorgegebene Menge an Festkörpermaterial 57 aus dem Vorratsbehälter 80 in die Sammelkammer 24 bevorzugt schwerkraftabhängig übertragen werden, (vergleiche Pfeil k in Figur 26).

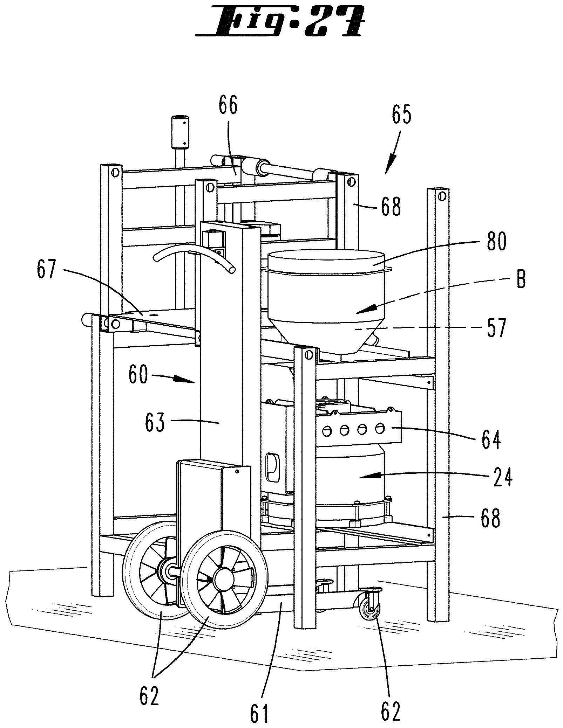

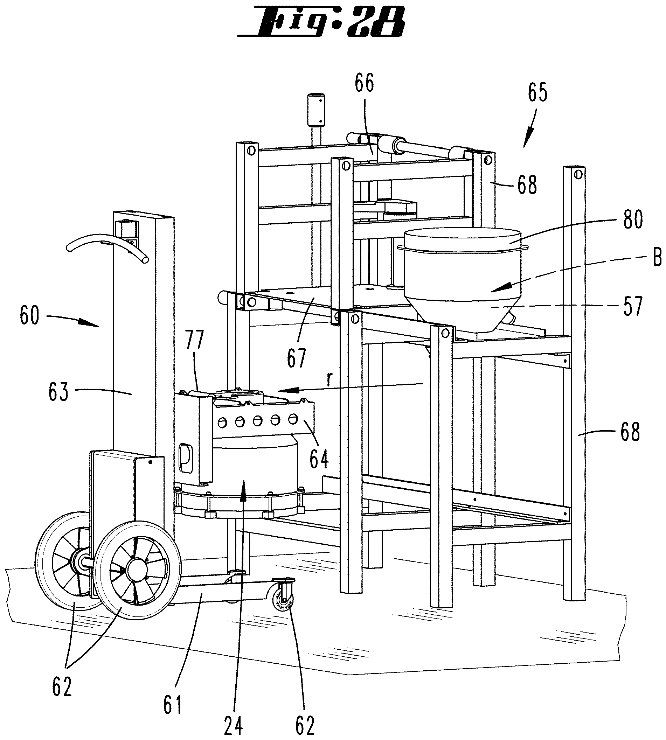

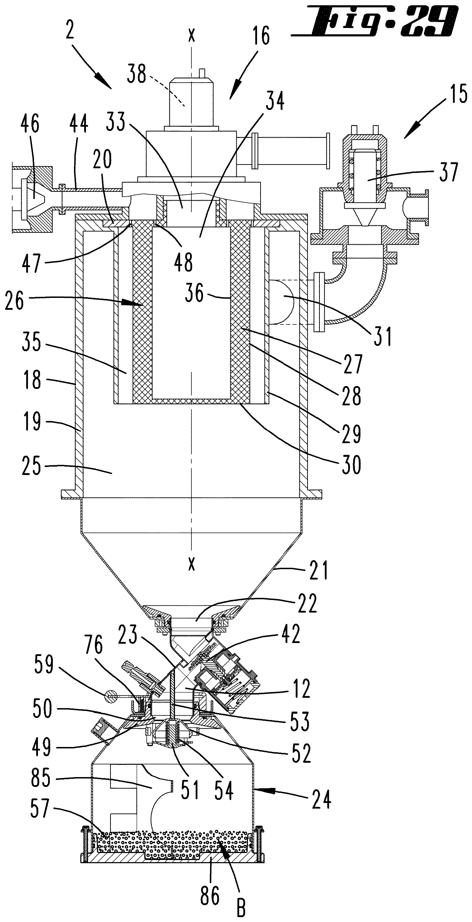

Die neu mit Festkörpermaterial 57 befüllte Sammelkammer 24 kann hiernach, gegebenenfalls nach einem Absenken gemäß Figur 27, mittels des Fahrgeräts 60 zurück zu der Filtereinrichtung 4 transportiert und dort wieder angeordnet werden (vergleiche Figuren 28 und 29).

Auch kann während des Passivierungs- und Entsorgungsvorgangs die Filtereinrichtung 2 zur Ermöglichung des weiteren Filterbetriebs mit einer Austausch-Sammelkammer 24 bestückt sein.

Soweit vorstehend auf Prozessgas Bezug genommen ist, kann bei einer Nutzung der Filtereinrichtung im Zusammenhang mit einem anderen abzureinigenden Medium, also insbesondere einer Nutzung in einem anderen Zusammenhang als mit einer Metall-Druckeinrichtung, das Prozessgas ein sonstiges Medium sein.

## Patentansprüche

1. Verfahren zur Abreinigung eines Filters (26) in einer Filtereinrichtung (2) mit einem Filtergehäuse (18) und dem darin befindlichen Filter (26), wobei die Filtereinrichtung (2) eine Filtergut-Sammelkammer (24) aufweist, zur Aufnahme von Filtergut (32), das im Zuge der Abreinigung des Filters (26) anfällt, wobei die Filtergut-Sammelkammer (24) vor einer ersten Aufnahme von Filtergut (32) mit einem Brandhinderungsmittel (B) gefüllt wird, wozu die Filtergut-Sammelkammer (24) über einen Teil des Volumens der Filtergut-Sammelkammer (24) mit einem Festkörpermaterial (27) befüllt wird, **dadurch gekennzeichnet, dass** im Zuge einer Abnahme der Filtergut-Sammelkammer (24) von der Filtereinrichtung (2) ein gezielter Austausch einer Kammeratmosphäre gegen die umgebende Atmosphäre vorgenommen wird, wobei in Verbindung mit einem Einströmen von Atmosphärenluft eine Mischbewegung der Filtergut-Sammelkammer (24) vorgenommen wird, zur Durchmischung des Filterguts (32) mit dem Feststoffmaterial (57).

2. Verfahren nach Anspruch 1, **dadurch gekennzeichnet, dass** die Filtergut-Sammelkammer (24) zur Brandhinderung mit einem Gas befüllt wird.

3. Verfahren nach Anspruch 1 oder 2, **dadurch gekennzeichnet, dass** die Filtergut-Sammelkammer (24) zur Brandhinderung mit einem Schutzgas befüllt wird.

4. Verfahren nach einem der vorhergehenden Ansprüche, **dadurch gekennzeichnet, dass** das Festkörpermaterial (57) granulatförmig ist.

5. Verfahren nach einem der vorhergehenden Ansprüche, **dadurch gekennzeichnet, dass** das Festkörpermaterial (57) glasartig ist.

6. Verfahren nach einem der vorhergehenden Ansprüche, **dadurch gekennzeichnet, dass** die Filtergut-Sammelkammer (24), nachdem ein vorbestimmter Füllgrad an Filtergut (32) in der Filtergut-Sammelkammer (24) erreicht ist, von der Filtereinrichtung (2) abgenommen wird und das Schutzgas gegen Atmosphärengas ausgetauscht wird.

7. Verfahren nach Anspruch 6, **dadurch gekennzeichnet, dass** der Austausch, bezogen auf ein Filtergut (32) aufnehmendes Volumen der Filtergut-Sammelkammer (24) von 10.000 bis 25.000 cm³ oder mehr, über einen Zeitraum von 2 Stunden bis hin zu 12 Stunden oder mehr vorgenommen wird.

8. Verfahren nach einem der vorhergehenden Ansprüche, **dadurch gekennzeichnet, dass** die von der Filtereinrichtung (2) abgenommene Filtergut-Sammelkammer (24) an einen Transportbehälter (74) angeschlossen wird und dass das Filtergut (32) unmittelbar in einen jedenfalls zur Atmosphäre abgesperrten Raum (79) des Transportbehälters (74) überführt wird.

## Claims

1. A method for cleaning a filter (26) in a filter device (2) having a filter housing (18) and the filter (26) located therein, the filter device (2) having a filtered material collecting chamber (24) for receiving filtered material (32) which accumulates in the course of cleaning the filter (26), wherein the filtered material collecting chamber (24) is filled with a fire prevention agent (B) before a first receipt of filtered material (32), for which purpose the filtered material collecting chamber (24) is filled with a solid material (57) over part of the volume of the filtered material collecting chamber (24), **characterized in that** in the course of a removal of the filtered material collecting chamber (24) from the filter device (2), a targeted exchange of a chamber atmosphere for the surrounding atmosphere is carried out, wherein in connection with an inflow of atmospheric air, a mixing movement of the filtered material collecting chamber (24) is carried out for mixing the filtered material (32) with the solid material (57).

2. The method according to claim 1, **characterized in that** the filtered material collecting chamber (24) is filled with a gas for fire prevention.

3. The method according to claim 1 or 2, **characterized in that** the filtered material collecting chamber (24) is filled with a protective gas for fire prevention.

4. The method according to one of the preceding claims, **characterized in that** the solid material (57) is granular.

5. The method according to one of the preceding claims, **characterized in that** the solid material (57) is glass-like.

6. The method according to one of the preceding claims, **characterized in that** the filtered material collecting chamber (24) is removed from the filter device (2) after a predetermined filling level of filtered material (32) in the filtered material collecting chamber (24) is reached and the protective gas is exchanged for atmospheric gas.

7. The method according to claim 6, **characterized in that** the exchange, with regard to a volume of the filtered material collecting chamber (24) receiving a filtered material (32) of 10,000 to 25,000 cm³ or more, is carried out over a period of time ranging from 2 hours up to 12 hours or more.

8. The method according to one of the preceding claims, **characterized in that** the filtered material collecting chamber (24) removed from the filter device (2) is connected to a transport container (74), and **in that** the filtered material (32) is transferred directly into a space (79) of the transport container (74) which, in any case, is shut off from the atmosphere.

## Revendications

1. Procédé de nettoyage d'un filtre (26) dans un dispositif de filtration (2) avec un boîtier de filtre (18) et le filtre (26) qui s'y trouve, le dispositif de filtration (2) présentant une chambre de collecte de matière filtrante (24) pour recevoir la matière filtrante (32) qui se produit au cours du nettoyage du filtre (26), la chambre de collecte de matière filtrante (24) étant remplie d'un agent ignifuge (B) avant une première réception de matière filtrante (32), en ce que, au cours d'un enlèvement de la chambre de collecte de matériau filtrant (24) du dispositif de filtration (2), on procède à un échange ciblé d'une atmosphère de chambre contre l'atmosphère environnante, un mouvement de mélange de la chambre de collecte de matériau filtrant (24) étant effectué en liaison avec un afflux d'air atmosphérique, pour mélanger le matériau filtrant (32) avec le matériau solide (57).

2. Procédé selon la revendication 1, **caractérisé en ce que** la chambre de collecte de matériau filtrant (24) est remplie d'un gaz pour empêcher un incendie.

3. Procédé selon la revendication 1 ou 2, **caractérisé en ce que** la chambre de collecte de matériau filtrant (24) est remplie d'un gaz protecteur pour empêcher un incendie.

4. Procédé selon l'une quelconque des revendications précédentes, **caractérisé en ce que** le matériau solide (57) est granulaire.

5. Procédé selon l'une quelconque des revendications précédentes, **caractérisé en ce que** le matériau solide (57) est vitreux.

6. Procédé selon l'une quelconque des revendications précédentes, **caractérisé en ce que**, après qu'un degré prédéterminé de remplissage la matière filtrante (32) a été atteint dans la chambre de collecte de matériau filtrant (24), la chambre de collecte de matériau filtrant (24) est retirée du dispositif de filtration (2) et le gaz de protection est remplacé par du gaz atmosphérique.

7. Procédé selon la revendication 6, **caractérisé en ce que** le remplacement est effectué sur une période de 2 heures à 12 heures ou plus, par rapport à un volume de la chambre de collecte de matériau filtrant (24) recevant la matière filtrante (32) de 10 000 à 25 000 cm³ ou plus.

8. Procédé selon l'une des revendications précédentes, **caractérisé en ce que** la chambre de collecte de matériau filtrant (24), retirée du dispositif de filtration (2), est raccordée à un récipient de transport (74) et **en ce que** la matière filtrante (32) est transféré directement dans un espace (79) du récipient de transport (74) qui est en tout cas isolé de l'atmosphère.
